# EUROPÄISCHE PATENTSCHRIFT

(11) **EP 0 655 268 B1**
(45) Veröffentlichungstag und Bekanntmachung des Hinweises auf die Patenterteilung: **08.04.1998**
(21) Anmeldenummer: 94118178.6
(22) Anmeldetag: 18.11.1994
(51) Int. Cl.: B01D 29/075, B01D 29/94, B01D 33/23, B01D 33/21

(54) **Filter zum kontinuierlichen Filtrieren von Feststoffe aufweisenden Flüssigkeiten in einem geschlossenen, zylindrischen Behälter**
Filter for continuous filtering liquids which contain solids in a closed cylindrical container
Filtre pour filtrer en continu des liquides contenant des solides dans un récipient cylindrique fermé

(30) Priorität: 30.11.1993 DE 4340691; 04.08.1994 DE 4427552
(43) Veröffentlichungstag der Anmeldung: 31.05.1995
(73) Patentinhaber: Geldmacher, Joachim, Dipl.-Ing., D-51588 Nümbrecht (DE)
(72) Erfinder: Geldmacher, Joachim, Dipl.-Ing., D-51588 Nümbrecht (DE)
(74) Vertreter: Mentzel, Norbert, Dipl.-Phys.

(56) Entgegenhaltungen:
- EP-A- 0 163 742
- DE-A- 4 225 818
- DE-C- 290 629
- US-A- 3 262 577
- PATENT ABSTRACTS OF JAPAN vol. 17 no. 221 (C-1054) & JP-A-04 358528 (SHINKO PANTEC) 11.Dezember 1992,

## Beschreibung

Die Erfindung bezieht sich auf einen Filter zum kontinuierlichen Filtrieren von Feststoffe aufweisenden Flüssigkeiten in einem geschlossenen, zylindrischen Behälter mit einem Druckgefälle zwischen der zu filtrierenden Flüssigkeit und dem Filtrat, mit auf einer angetriebenen, horizontalen Hohlwelle lotrecht angeordneten, im Abstand zueinander stehenden, aus hohlen Filtersektoren gebildeten Scheiben mit innerhalb des für den Abfluss des Filtrats in die Hohlwelle vorgesehenen Hohlraums angeordneten Abstützungen für die Filterauflagen beidseitig auf jedem Filtersektor und mit beweglich angepressten Einrichtungen auf beiden Seiten jeder Filterscheibe zum Abnehmen und Entfernen der Feststoffe von den die Filterscheibenaussenseiten bildenden Filterauflagen und zu deren Reinigung, wobei jede Einrichtung zum Abnehmen und Entfernen der Feststoffe von den Filterauflagen und zu deren Reinigung von je einem geschlossenen und vollständig von der zu filtrierenden Flüssigkeit umgebenen hohlen Abnahmekasten mit mehreren, voneinander getrennten Kammern besteht, wobei jede Kammer mindestens einen, den Radius der Filterscheibe erfassenden Einlassspalt aufweist und mindestens eine der Kammern abgedichtet gegen die zugehörige Filterauflage anliegt. Ein solcher, z.B. aus der DE-C-42 25 818 bekannter Filter kann eine verhältnismäßig große Durchlaufleistung erzielen, da beim bestimmungsgemäßen Gebrauch die Filterscheiben vollständig in die zu filtrierende Flüssigkeit eingetaucht sind und somit die gesamte Filterfläche der Filterscheiben ausgenutzt wird. Obgleich der die Filterscheiben aufnehmende zylindrische Behälter vollständig mit der zu filtrierenden Flüssigkeit gefüllt ist, wird das Abnehmen und Entfernen der Feststoffe von den die Filterscheibenaussenseiten bildenden Filterauflagen nur wenig beeinträchtigt, da die Einrichtungen zum Abnehmen und Entfernen der Feststoffe von den Filterauflagen von je einem geschlossenen und vollständig von der zu filtrierenden Flüssigkeit umgebenen hohlen Kasten gebildet sind. Die Kästen liegen dabei abgedichtet gegen die zugehörige Filterauflage an und weisen im Anlagebereich mindestens einen, den gesamten Radius der Filterscheibe erfassenden Einlassspalt auf. Die an den Filteraussenseiten angesammelten Feststoffe können somit abgenommen und entfernt werden.

Aus der DE-A-10 57 071 ist ein Scheibenfilter zur Filtration und Auspressung des Filterkuchens bekannt, bei dem in üblicher Weise in einzelne Zellen unterteilte Filterplatten auf der einen Seite mit Filtermedium bespannt wird, wobei die bespannten Seiten zweier Teller einander zugekehrt sind und wobei die Scheiben über eine flexible Rohrleitung mit den Rohrleitungen in der Achse, die in bekannter Weise in einem Steuerorgan münden, verbunden sind und wobei außerdem die Teller flexibel auf der Achse angeordnet sind und an einer außerhalb des Troges liegenden Stelle durch einstellbare Presswalzen zusammengedrückt werden. Durch diese Entgegenhaltung sind somit unter Druck einstellbare Walzen bekannt.

Die DE-C-638 001 offenbart eine Vorrichtung zum Abnehmen des Filterkuchens von Drehfiltern. Aus dieser Entgegenhaltung sind somit Abnahmewalzen für Drehscheibenfilter bekannt.

Die US-A-30 80 064 offenbart schließlich einen Filter zum kontinuierlichen Filtrieren von Feststoffe aufweisenden Flüssigkeiten, wobei aus der Entgegenhaltung insbesondere federbelastete Schaber bekannt sind.

Der Erfindung liegt die Aufgabe zu Grunde den Drehscheibenfilter der eingangs erläuterten Art noch weiter zu verbessern, so dass er in einfacher Weise zu handhaben ist und große Filterflächen mit hohen Zulaufdrücken bei geringer Baugröße aufweist und die Abdichtung von mindestens einer Kammer der Kasteneinheit gegen die Filterauflagen gewährleistet ist, sowie auch die Abdichtung der mikroporösen Filterauflagen gegenüber dem Scheibenhohlraum. Dies wird erfindungsgemäß dadurch gelöst,
a) dass die Filterauflagen druckfeste Filterplatten sind,
b) dass zwischen den beiden den Hohlraum zwischen sich einschließenden Filterplatten gegenseitige Abstützungen vorgesehen sind,
c) dass die als zusätzliche Filterschicht ausgebildete Oberfläche der Filterplatten und die Filterplatten membranfilterähnlich und mikroporös aus mindestens einer Materialart und mindestens einer Korngrößenmischung bestehen,
d) dass die Filtersektoren aussen umlaufende Schlitze und eingelegte Pressleisten aufweisen und mit druckdichter Anpressung gegen Sektorträger Deckel und Wellenaufnahmeringe verschraubt werden,
e) dass die Abnahmekästen federelastisch gelagerte, auf die Filterscheibenaussenseiten aufliegende Schaber aufweisen,
f) dass die Abnahmekästen federelastisch angepresste, auf die Filterscheibenaussenseiten aufliegende Dichtleisten aufweisen,
g) dass die sich radial über die Filterscheibenaussenseiten erstreckenden Abnahmekästen eine schräge Vorderwand und eine Spaltöffnung aufweisen,
h) dass innerhalb des Abnahmekastens eine Spritzkammer zur Reinigung der Filterplattenoberfläche mit mindestens einem um diese Spritzkammer gelegten Vakuum-Kanal vorgesehen ist,
i) dass die Spritzkammer belüftet ist und mit Spritzdüsen und Spülwasserablauf ausgerüstet ist.

Es kommt diesen Merkmalen eine besondere Bedeutung zu. Die Filterscheibenaussenseiten sind in bekannter Weise von ebenen, druckfesten Filterplatten gebildet, die membranfilterähnliche, mikroporöse Oberflächen aufweisen und mit inneren, gegenseitigen Abstützungen versehen sind. Dadurch werden in einfacher Weise großflächige Filterflächen gebildet, die in einfacher Weise zu handhaben sind. An den Filterscheibenaussenseiten liegen bewegliche, angepresste Abnahmebehälter an. Hiermit können die Feststoffe von den Filterscheibenaussenseiten abgenommen werden. Dabei sind auslaufseitig beweglich gelagerte Schaber und elastisch angepresste Dichtleisten vorgesehen, um den Abnahmebehälter zuverlässig abzugrenzen gegenüber dem Filtrat. Die Schaber können eine scharfe Vorderkante haben. Bei einer anderen Ausführung kann die Kante jedoch auch stumpf ausgebildet sein.

Die Abnahmekästen zur Aufnahme von mindestens einer gegen die Filterauflagen abgedichteten Kammer erstrecken sich radial über die gesamte Filterauflage jeder Scheibe und weisen am äußeren Scheibenrand sowie am inneren Rand der Filterauflage in der Nähe der Welle durchgehende Abdichtungen entlang jeder Kammer der Kasteneinheit auf. Zwischen diesen seitlichen Dichtungen der Kasteneinheit und der Filterauflage sowie der Oberwand der Kasteneinheit wird ein Einlaufspalt für den Feststoff gebildet, der durch die Drehung der Scheibe in den anschließenden Feststoffsammelraum befördert wird. Am Ende des Feststoffsammelraums wird der Feststoff durch einen auf der Filterauflage festanliegenden Schaber abgehoben und kann durch eine Absaugöffnung abgesaugt werden. Die vorgereinigte Filterauflage kann in einer anschließenden Rückspülkammer durch Einwirkung von Vakuum unter Rücksaugung von Filtrat aus dem Scheibenhohlraum weiter gereinigt werden. Mit weiterer Drehung der Scheibe kann die Reinigung der Filterplattenauflage durch Einwirkung von Wasser-Spritzdüsen weiterverbessert werden, wobei die Spritzkammer durch einen Rohranschluß mit der Außenluft verbunden ist. Entlang der belüfteten Spritzkammer ist ein Vakuum-Kanal gezogen, so daß eine besonders gute Abdichtung erzielt und das Leckwasser abgesaugt wird.

Am Ende der Kasteneinheit liegt eine Dichtleiste flach auf der gereinigten Filterauflage und verhindert das Eindringen von unter Druck stehender Feststoffe aufweisender Flüssigkeit aus dem zylindrischen Behälter in die Kasteneinheit. Das Spülwasser aus der Spritzkammer wird durch eine Leitung aus dem Druckbehälter geführt. Jede Kammer der Kasteneinheit kann auslaufseitig eine Schaberkante aufweisen, so daß abgetrennte Feststoffe sicher abgeführt werden können.

Die ebene, druckfeste Filterplatte kann aus einer aus Polymer-Kunststoff von 0,5 bis 200 Mikron Feinheit gesinterten Platte bestehen. Mit dieser gesinterten Platte mit einer Filterfeinheit von 0,5 bis 200 Mikron wird zuverlässig eine ebene, druckfeste Filterplatte geschaffen, die aus grobem Stützkörpermaterial in Form von Polymer-Kunststoff bestehen kann. Eine zuverlässige Filtrierung ist somit gewährleistet und die Filterplatte weist eine verhältnismäßig große Standzeit auf.

Die ebene, druckfeste Filterplatte aus Polymer-Kunststoff kann aus einer mikroporös gesintertem membranfilterähnlichen Oberfläche mit 0,5 bis 200 Mikron Feinheit bestehen mit grobem Stützkörpermaterial von 0,5 bis 200 Mikron Filterfeinheit. Die Filterplatte ist somit zuverlässig druckfest und weist eine ebene Oberfläche auf und kann mit grobem Stützkörpermaterial abgestützt sein, wobei die Filterfeinheit eine Größe von 0,5 bis 200 Mikron erreichen kann.

Die ebene, druckfeste Filterplatte kann aus einer aus Metallpulverspänen von gesintertem 0,5 bis 200 Mikron Feinheit gesinterten Platte bestehen. Die aus Metallpulverspänen gesinterte Filterplatte kann somit ebenfalls in einfacher Weise eine ebene Oberfläche aufweisen und druckfest sein und aus grobem Stützkörpermaterial bestehen mit einer Filterfeinheit von 0,5 bis 200 Mikron.

Die ebene, druckfeste Filterplatte kann außenseitig mindestens eine zusätzliche membranfilterähnliche, metallkeramisch aufgebrachte Filterschicht mit vorzugsweise zwischen 0,5 und 50 Mikron Filterfeinheit aufweisen. Dadurch wird der Filter in einfacher Weise verbessert, da er nunmehr aus mindestens zwei Schichten besteht und eine zusätzliche membranfilterähnliche, aufgesinterte Filterschicht aufweist, die vorzugsweise eine Filterfeinheit von 0,5 bis 50 Mikron aufweist.

Die ebene, druckfeste Filterplatte kann außenseitig mindestens eine zusätzliche, membranfilterähnliche, mikroporöse Filterschicht aus Polymer-Kunststoff mit vorzugsweise zwischen 0,5 und 50 Mikron Filterfeinheit aufweisen. Mit dieser mikroporösen weiteren Filterschicht aus Polymer-Kunststoff wird ebenfalls eine ebene, druckfeste Filterplatte mit großer Festigkeit geschaffen.

Die ebene, druckfeste Filterplatte kann aus Verbund-Schicht-Sieben bestehen mit grobem Stützkörpermaterial und membranfilterähnlicher, durch Schweiß-Punkt-Heften metallisch festverbundenen Filterschicht, vorzugsweise mit einer Filterfeinheit zwischen 0,5 und 50 Mikron. Mit diesen mehrschichtigen Sieben kann ebenfalls in einfacher und zuverlässiger Weise eine ebene, druckfeste Mehrschichtfilterplatte geschaffen werden, die eine metallisch festverbundene Filterschicht aufweist und die erforderliche Filterfeinheit aufweist.

Die Abstützungen der Mehrschichtfilterplatte kann vollflächig innerhalb des Filtrat-Ablauf-Hohlraums der Scheibe zwischen jeweils zwei Filterplatteninnenseiten durch druckfeste Wendelfedern gebildet sein, die vorzugsweise in Umfangsrichtung der Scheiben angeordnet sind. Mit diesen in die Hohlräume der Scheiben eingesetzten Wendelfedern werden in einfacher und zuverlässiger Weise die Filterplatten abgestützt, so daß ein nach Innenbiegen der Filterplatten verhindert wird.

Die Filterplatten können gegen Träger, Deckel und Wellenaufnahmeringe der Scheibensektoren druckfest mit Preßleisten durch mechanische Pressung in U-förmigen Dichtnuten verschlossen sein. Dadurch sind in einfacher Weise die Filterplatten zuverlässig gegen die Hohlräume gehaltert und abgedichtet.

In den Preßflächen können zwischen Nuten und Preßleisten vorzugsweise gegenüberliegende, ein Quadrat bildende Nuten eingelassen sein, in denen gummielastische Runddichtungen unter Pressung verformt werden. Die Filterplatten sind somit in einfacher Weise mit quadratischen Nuten versehen, in denen gummielastische Runddichtungen eingelegt sind und die erforderliche Abdichtung bewirken.

Die mechanische Pressung kann durch einen Spannring außen um jede Scheibe aufgebracht sein. Mit einem auf die Scheibe des Filters aufgebrachten Spannring kann somit in einfacher Weise die mechanische Pressung bewirkt werden.

Die radial über die Scheibenflächen sich erstreckenden, angepreßten Aufnahmebehälter können federelastisch gelagerte Dichtelemente aufweisen. Diesen federelastischen Dichtelementen kann somit in einfacher Weise die erforderliche Abdichtung des Abnahmebehälters erzielt werden.

Die federelastischen Lagerungen für die konische Walze, sowie für Schaber und Dichtleisten können als Blattfeder ausgebildet sein. Mit den Blattfedern werden somit in einfacher und zuverlässiger Weise federelastische Lagerungen für die konische Walze sowie für den Schaber und die Dichtleisten geschaffen.

Der Schaber kann an einer Blattfeder gelagert und die auslaufseitige Dichtungsleiste an den Schaber mit einer zweiten Blattfeder gelagert sein. Dadurch wird in einfacher Weise sowohl der Schaber als auch die auslaufseitige Dichtleiste mit Blattfedern gelagert, wobei die auslaufseitige Dichtleiste zur Halterung am Schaber vorgesehen ist.

Die Anpreßkraft der Abnahmekästen kann gegen die Filterplatten mit einer Druckvorrichtung gesteuert einstellbar sein. Dadurch ist mit einer Druckvorrichtung die Anpreßkraft der Abnahmekästen zuverlässig einstellbar.

Eine Förderschnecke für Feststoffaustrag innerhalb des Abnahmekastens kann eng und parallel zur Filterplattenoberfläche angeordnet sein. Mit dieser Förderschnecke, die nur wenig Raum beansprucht, können somit in zuverlässiger Weise die Feststoffe abtransportiert werden.

Die konische Dicht- und Abnahmewalzen können mit sehr dicken und sehr weichen gummielastischen Bezügen ausgerichtet und die Bezüge stark verformbar sein. Dadurch wird eine starke, elastische Anpressung und Abdichtug erzielt.

Zwischen konischer Dicht- und Abnahmewalze sowie Austragsschnecke kann ein Preßschuh zur Auspressung von Flüssigkeiten aus dem Kuchen angeordnet sein. Mit diesem Preßschuh kann somit in einfacher Weise der Feststoff ausgepreßt werden, so daß nach der Bearbeitung mit dem Preßschuh der Feststoff nur noch wenig Flüssigkeit aufweist.

Der Preßschuh kann zulaufseitig schwenkbar gelagert und auslaufseitig vorzugsweise mit einem Druckluftschlauch gegen den Kuchen preßbar sein. Dadurch kann der Preßschuh in einfacher Weise an den Feststoff angepreßt werden und mit dem Druckluftschlauch die erforderliche Pressung bewirkt haben.

In dem Preßschuh kann mindestens eine Reihe von Öffnungen so angebracht sein, daß die ganze Kuchenbreite durch Drucklufteinblasung weiter trockenbar ist. Durch das Einblasen von Druckluft in die Öffnungen kann somit in einfacher Weise der Feststoffkuchen weiter getrocknet werden.

Die Einströmung der Flüssigkeit kann vorzugsweise annähernd parallel gerichtet über die Scheibenoberfläche aus einem Schlitzrohr erfolgen, das an dem Abnahmebehälter gelagert ist. Mit diesem Einbringen von Flüssigkeit kann eine einfache und zuverlässige Reinigung der Schichtplatte bewirkt werden.

Die Kasteneinheit kann einlaufseitig eine schräge Vorderwand aufweisen mit einer Spaltöffnung zu dem anschließenden Feststoffsammelraum, aus dem der Feststoff mit einer Förderschnecke austragbar ist. Dadurch ist in einfacher und zuverlässiger Weise ein Austragen des Feststoffes mit der Förderschnecke möglich.

Zwischenwände können den Feststoffsammelraum und die anschließende Rückspülkammer sowie die nachfolgende Kammer voneinander abtrennen und die Abdichtung kann durch Anwendung von Vakuum in der Rückspülkammer und in dem Ringkanal gewährleistet sein, wobei Leckwasser außen um die Spritzkammer herum absaugbar und die Anpreßkraft an die zugehörige Filterauflage erhöhbar ist. Dadurch wird zuverlässig und einfach eine Reinigung erzielt.

Die Filterauflage kann durch die Vakuumkraft eine kleine Verformung in den Vakuum-Kanal und die Rückspülkammer hinein erfahren. Durch diese Verformung wird ein leichtes Abheben der Feststoffschichten ermöglicht.

Der Feststoffsammelraum und jede Kammer kann auslaufseitig eine scharfe Schaberkante aufweisen. Mit dieser scharfen Schaberkante kann ebenfalls der Feststoff zuverlässig abgehoben werden.

Die Spritzkammer kann über ein Rohr mit der Außenluft verbunden sein und durch den Anschluß Flüssigkeit mit den Düsen auf die Filterauflage gespritzt werden und das Spritz-Spülwasser durch den Ablauf nach außen frei ablaufen. Dadurch kann in einfacher Weise das Spritzwasser nach der Durchführung des Reinigungsvorganges aus der Spritzkammer frei ablaufen.

An der Welle und am Außenrand sowie zwischen den Kammern können Dichtleisten zur Abtrennung der Kammern gegeneinander und gegenüber dem Druckbehälterinnenraum angeordnet sein. Dadurch werden die Kammern zuverlässig abgedichtet.

Die Filterauflagen können aus einem mikroporösem Kunststoffgemisch von unterschiedlichem Material und gleicher Korngröße bestehen. Dadurch werden Filterauflagen mit großer Feinheit und Festigkeit geschaffen.

Die mikroporösen Filterplatten können aus gleichem Kunststoffmaterial mit mindestens zwei verschiedenen Korngröße bestehen. Dadurch werden einfache und zuverlässig wirkende mikroporöse Filterplatten geschaffen.

Die Filterauflagen können aus mindestens zwei unterschiedlichen Materialen und mindestens zwei unterschiedlichen Korngrößen bestehen. Auch hiermit werden zuverlässig wirkende Filterauflagen geschaffen.

Die die Filterscheibenaußenseiten bildenden Filterauflagen können mit am äußeren Rand umlaufendenen U-förmigen Nuten und darin eingesetzten Nut-Preßleisten gegen die Scheibenträger und die Wellenaufnahmeringe und die Deckelleisten mit Preßschrauben abgedichtet sein. Dadurch sind die Filterscheibenaußenseiten zuverlässig abgedichtet.

Auf der Zeichnung ist die Erfindung in zwei Ausführungsbeispielen dargestellt und zwar zeigen:
- Fig. 1: einen erfindungsgemäßen Filter zum kontinuierlichen Filtrieren von Feststoffe aufweisenden Flüssigkeiten in einem geschlossenen Behälter in Seitenansicht,
- Fig. 2: einen Schnitt nach der Linie II - II der Fig. 1,
- Fig. 3: einen Schnitt nach der Linie III - III der Fig. 2,
- Fig. 4: einen Stirnansicht des Abnahmebehälters in Richtung des Pfeiles IV gesehen,
- Fig. 5: eine zweite Ausführungsform des Abnahmebehälters in Stirnansicht,
- Fig. 6: den Abnahmebehälter in Seitenansicht,
- Fig. 7: eine zweite Ausführungsform des erfindungsgemäßen Filters zum kontinuierlichen Filtrieren von Feststoffe aufweisenden Flüssigkeiten in einem geschlossenen Behälter in Seitenansicht,
- Fig. 8: einen Schnitt nach der Linie VIII - VIII der Fig. 7,
- Fig. 9: eine Stirnansicht des Abnahmekastens in Richtung des in Fig. 8 gezeigten Pfeiles IX gesehen und
- Fig. 10: einen Schnitt nach der Linie X - X der Fig. 8.

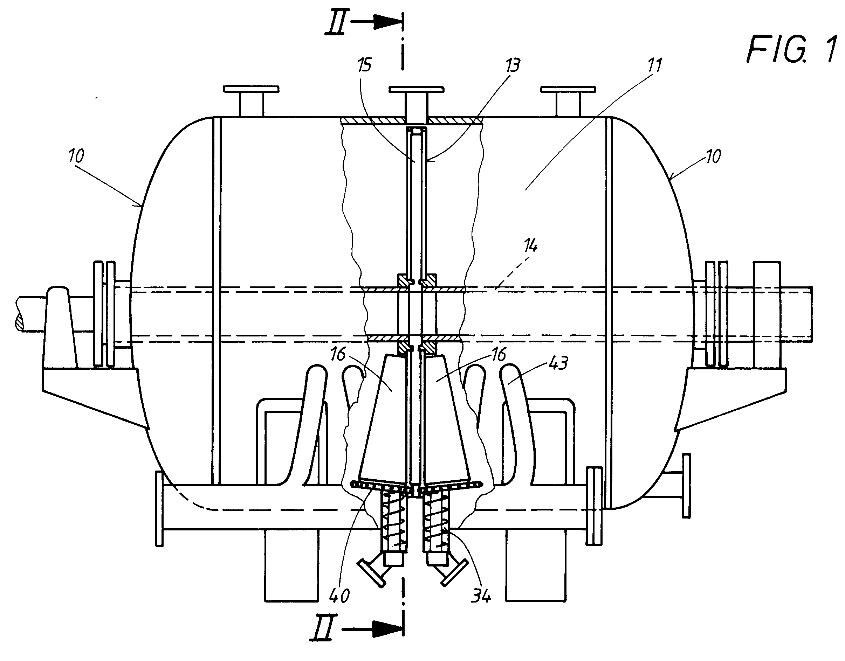

Die in den Fig. 1 bis 6 der Zeichnungen dargestellte erste Filtereinrichtung zum kontinuierlichen Filtrieren von Feststoffe aufweisenden Flüssigkeiten besteht aus einem liegenden, mit Endböden 10 geschlossenen, zylindrischen behälter 11, der vollständig mit der zu filtrierenden Flüssigkeit gefüllt ist, mit einem Druckgefälle zwischen der zu filtrierenden Flüssigkeit und dem Filtrat. Der Druckbehälter 11 kann dabei einen Zulaufdruck von über 10 bar aufweisen. Der Behälter weist eine Reihe aus hohlen Filtersektoren 12 gebildete, im Abstand zueinanderstehende Scheiben 13 auf, die auf einer angetriebenen, horizontalen Hohlwelle 14 lotrecht angeordnet sind.

Die Scheiben 13, von denen in Fig. 1 nur eine dargestellt ist, weisen beidseitig auf jedem Filtersektor 12 durchlässige Filterauflagen auf, die noch zu beschreiben sind. Der dazwischen liegende Hohlraum 15 dient zum Abfluß des Filtrats durch die Hohlwelle 14. Auf beiden Seiten jeder Filterscheibe 13 sind noch zu erläuternde, beweglich angepreßte Einrichtungen zum Abnehmen und Entfernen der Feststoffe von den die Filterscheibenaußenseiten bildenden Filterauflagen vorgesehen. Jede der Einrichtungen zum Abnehmen und Entfernen der Feststoffe von den Filterauflagen wird von je einem geschlossenen und vollständig von der zu filtrierenden Flüssigkeit umgebenen hohlen Kasten gebildet, der abgedichtet gegen die zugehörige Filterauflage anliegt und im Anlagebereich in noch zu beschreibender Weise mindestens einen, den gesamten Radius der Filterscheibe 13 erfassenden Einlaßspalt 17 aufweist. Der von dem Kasten 16 gebildete Abnahmebehälter dient somit in zuverlässiger Weise mit seinem Einlaßspalt 17 zum Abnehmen der Feststoffe von den Filterauflagen.

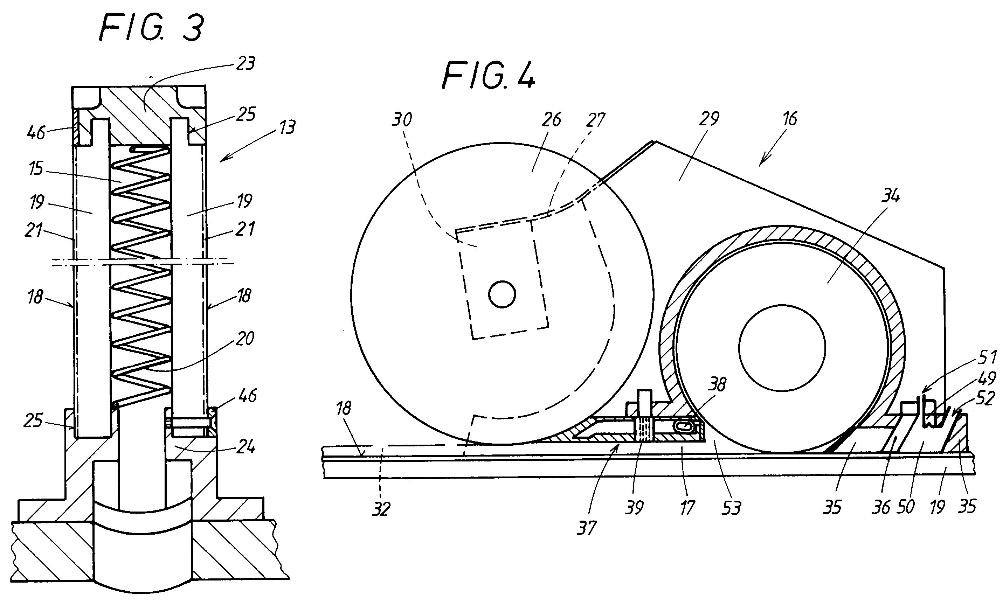

Wie insbesondere aus der Fig. 3 ersichtlich, sind die von den Außenseiten 18 der Filterscheibe 13 gebildeten Filterauflagen aus jeweils zwei ebenen, druckfesten Filterplatten 19 mit mindestens einer Filterschicht gebildet mit inneren, gegenseitigen Abstützungen 20 und membranfilterähnlichen, mikroporösen Oberflächen. Die ebene, druckfeste Filterplatte 19 besteht dabei aus einer aus grobem Stützkörpermaterial gesinterten Platte, die eine Filterfeinheit von 10 bis 200 Mikron aufweist. Die Filterplatte 19 kann dabei aus gesintertem Polymer-Kunststoff-Polyäthylen, mikroporösem Polysulfon, mikroporösem Polypropylen, gesintertem Metallpulver/Bronzepulver oder aus gesinterten rostfreien Stahlpulverspänen bestehen.

Die ebene, druckfeste Filterplatte 19 kann außenseitig mindestens eine zusätzliche membranfilterähnliche, aufgesinterte Filterschicht 21 mit vorzugsweise zwischen 0,5 und 50 Mikron Filterfeinheit aufweisen. Die zusätzliche, aufgebrachte Filterschicht 21 kann dabei aus metallkeramischen Werkstoffen, Siliziumkarbid, Aluminiumoxid, Zirkonoxid bestehen oder/und eine zusätzliche mikroporöse Filterschicht aus Polymer-Kunststoff und Carbonwerkstoff aufweisen. Weiterhin ist es auch möglich, daß die ebene, druckfeste Schichtfilterplatte 19 aus nicht näher dargestellten Verbund-Schicht-Sieben besteht, mit grobem Stützkörpermaterial und membranfilterähnlicher, durch Schweiß-Punkt-Heften metallisch festverbundener Filterschicht, vorzugsweise mit einer Filterfeinheit zwischen 0,5 und 50 Mikron.

Aus der Fig. 3 ist weiterhin zu entnehmen, daß die Abstützungen 20 der Mehrschichtfilterplatte 19, 21 vollflächig innerhalb des Filtrat-Ablauf-Hohlraums 15 der Scheiben 13 zwischen jeweils zwei Filterplatteninnenseiten durch druckfeste Wendelfedern 20 gebildet sind, die vorzugsweise in Umfangsrichtung der Scheiben 13 angeordnet sind.

Wie bereits erläutert, weisen die Scheiben 13 hohle Filtersektoren 12 auf, wobei die Filterplatte 19, 21 in Träger 22, Deckel 23 und Wellenaufnahmeringe 24 eingesetzt sind. Träger 22, Deckel 23 und Wellenaufnahmering 24 eines jeden Sektors 12 weisen dabei U-förmige Nuten 25 auf, in denen die Filterplatten 19, 21 eingesetzt sind. Die FIlterplatten 19, 21 sind dabei in den U-förmigen Dichtungen 25 mit Preßleisten 46 durch mechanische Pressung angepreßt. In nicht näher dargestellter Weise können die Filterplatten 19, 21 auch unter Zwischenlage von nicht näher dargestellten gummieleastischen Runddichtungen abgedichtet werden. Die mechanische Pressung kann auch durch einen nicht näher dargestellten Spannring von außen um jede Scheibe 13 aufgebracht werden.

Wie insbesondere aus den Fig. 4, 5 und 6 ersichtlich, können die sich radial über die Filterscheibenaußenseite 18 sich erstreckenden, angepreßten Aufnahmebehälter 16 einlaufseitig beweglich gelagerte Dicht- und Abnahmewalzen 26 aufweisen und mit geringem Spaltabstand 17 dazu auslaufseitig federelastisch gelagerte Schaber 31 und federelastisch angepreßte, auf die Filterscheibenaußenseiten 18 aufliegende Dichtleisten aufweisen, wobei auch zwischen der Hinterwand 47 und den Abnahmewalzen 26 beweglich angepreßte Dichtleisten 48 vorgesehen sind.

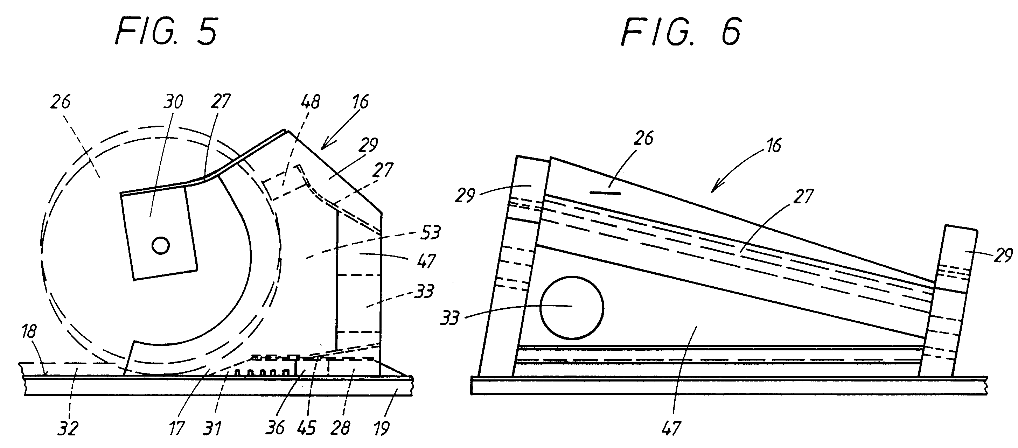

Wie insbesondere aus den Fig. 4, 5 und 6 ersichtlich, ist die Dicht- und Abnahmewalze 26 mit zwei beweglichen Verbindungsteilen 27 gehaltert, wobei diese beweglichen Verbindungsteile 27 von zwei Federblechen gebildet sind. Die Federbleche sind dabei in nicht näher dargestellter Weise an den Abnahmebehälter 16 gelagert. Wie insbesondere aus der Fig. 5 ersichtlich, liegt an der Dicht- und Abnahmewalze 26 eine Walzendichtleiste 48 an. Diese Walzendichtleiste 48 ist ebenfalls an einem Federblech gehaltert. An die Dicht- und Abnahmewalze 26 liegt weiterhin die Seitenwand 29 des Abnahmekastens 16 dicht an. Die Walzenlagerung 30 des beweglichen Verbindungsteiles 27 liegt nicht dicht gegen die Stirnfläche der Dicht- und Abnahmewalze 26 an. Wie bereits erwähnt, sind dabei die federelastischen Lagerungen für die konische Walze 26 sowie für den noch zu erläuternden Schaber 31 und für die Dichtleisten 28 und 48 als Blattfederns ausgebildet.

Mit der im Abnahmebehälter 16 gelagerten Dicht- und Abnahmewalze 26 werden die sich auf den Filterplatten 19, 21 sich ansammelnden Feststoffe gepreßt und von der Außenseite 18 der Filterscheibe 19, 21 angehoben. Durch das Pressen wird somit der Feststoffkuchen 32 entwässert. Damit der Feststoffkuchen 32 auch zuverlässig von den Außenseiten 18 der Filterplatten 19, 21 losgeht, ist der Schaber 31 vorgesehen, der den Feststoffkuchen 32 abhebt. Der Schaber 31 kann dabei ebenfalls von einer Blattfeder 45 gehaltert sein. In dargestellter Weise kann an dem Schaber 31 auch noch mit einer weiteren Blattfeder 45 eine auslaufseitige Dichtleiste 28 vorgesehen werden. Der Schaber 31 kann eine scharfe Vorderkante aufweisen. In nicht näher dargestellter Weise kann die Vorderkante des Schabers 31 auch stumpf ausgebildet sein.

An der Hinterwand 47 des Abnahmebehälters 16 der in Fig. 5 dargestellten Ausführung ist eine Absaugöffnung 33 vorgesehen, durch die der Feststoff aus dem Innenraum des Abnahmebehälters 16 entfernt werden kann. Die Dichtkraft aller Dichtelemente kann im Verhältnis jeder Druckveränderung im Druckbehälter 11 angepaßt werden.

Bei dem in der Fig. 4 dargestellten Ausführungsbeispiel ist im Abnahmebehälter 16 neben der Dicht- und Abnahmewalze 26 auch noch eine Förderschnecke 34 eng und parallel zur Oberfläche 18 der Filterplatten 19, 21 angeordnet. Mit dieser Förderschnecke kann der Feststoffkuchen 32 von den Außenseiten 18 der Filterplatten 19, 21 abgenommen und bis zur Außenseite des zylindrischen Behälters 11 geführt werden.

Hinter der Förderschnecke 34 ist eine Schaberdichtleiste 35 mit dem Behälter 16 verbunden und liegt dicht gegen die Filteroberfläche 18 an. Dadurch wir in einfacher Weise ein vollständiges Abnehmen des Feststoffkuchens 32 von der Außenseite 18 der Filterplatte 19, 21 gewährleistet.

Die Schaberdichtleiste 35 kann einen Vakuumkanal 36 für die Rücksaugung von Filtrat aus dem Scheibenhohlraum 15 zur Reinigung der Filterplatte 19, 21 aufweisen. Mit diesem Filtrat kann somit in einfacher und zuverlässiger Weise die Außenseite 18 der Filterplatte 19, 21 gesäubert werden. Der Vakuumkanal 36 kann sich an der Unterseite der Seitenwände 29 fortsetzen, wodurch eintretendes Leckwasser absaugbar ist. In einer anschließenden Spritzkammer 50 kann unter Belüftung (51) die Filterschicht (21) mit Spritzdüsen (49) weiter gereinigt werden, wobei Spülwasser an dem Ablauf 52 austreten kann.

Zwischen der konischen Dicht- und Abnahmewalze 26 und der Förderschnecke 34 kann, wie insbesondere aus der Fig. 4 ersichtlich, ein Preßschuh 37 zur weiteren Auspressung von Flüssigkeit aus dem Feststoffkuchen 32 angeordnet sein. Der Preßschuh 37 kann zulaufseitig schwenkbar gelagert sein und auslaufseitig einen Druckluftschlauch 38 aufweisen, mit dem der Preßschuh gegen den Feststoffkuchen 32 drückbar ist. Zusätzlich kann der Preßschuh 37 eine Reihe von Öffnungen 39 aufweisen, die mit Druckluft beaufschlagbar sind und über die gesamte Breite des Feststoffkuchens 32 wirken, um ein Trocknen zu erreichen.

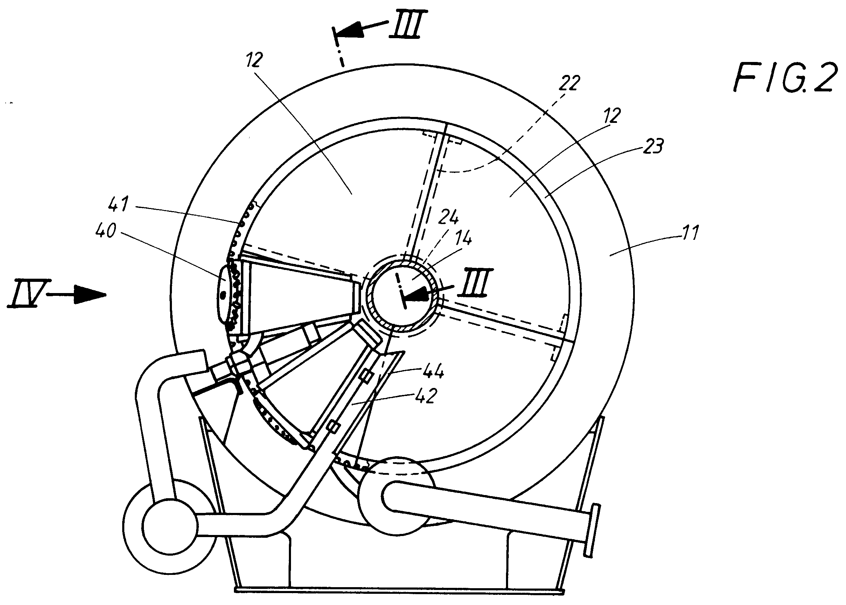

Wie bereits erläutert, soll der zylindrische Behälter eine möglichst große Anzahl Scheiben aufweisen, die eng und parallel zueinander auf der zentralen Drehwelle 14 angeordnet sind, so daß in dem Druckbehälter 11 eine möglichst große Filterfläche eingebaut ist. Der Druckbehälter 11 kann erfindungsgemäß bis über 10 bar Zulaufdruck aufnehmen. Die ebenen Filterflächen sind als druckfeste Einschicht- oder Mehrschichtfilterplatten 19, 21 ausgebildet mit gegenseitigen inneren Abstützungen 20 und bilden die beidseitigen druckdichten Abdeckungen 19 der Filterscheiben 13. Als druckfester Abstandhalter 20 für die Filterplatten 19, 21 sind im Filtrat-Ablauf-Hohlraum 15 ganzflächig in jedem Scheibensektor 12 Wendelfedern 20 angeordnet. Bei kleinen Filtern sind einteilige oder zweitteilige oder Viertel-Kreissektoren vorgesehen, wie dies in Fig. 2 dargestellt ist. Bei größeren Filtern können auch acht Sektoren auf jeder Scheibenseite 13 angeordnet werden. Die U-förmigen Einstecknuten 25 sind mit zusätzlichen, elastisch verformbaren Dichtungen versehen. In einfacher Weise wird jeder Sektoraufbau 12 durch einen äußeren, konzentrisch zur Welle 14 mit je zwei Sektorträgern verschraubten, teilkreisförmigen Deckeln 23 mit je zwei U-förmigen Einsteckdichtungen 25 verschlossen, die zur Abdichtung vorzugsweise mit Spannringen und Spannschrauben angepreßt werden. Die Pressung kann auch über Preßleisten 46 auf Dichtungen und den Rändern der Filterplatte 19 aufgebracht werden.

Die Abscheidung der Feststoffe 32 aus der unter Druck zulaufenden Flüssigkeit erfolgt auf den mikroporösen glatten Schichtplattenoberflächen 18, wobei sich gegenüber dem durchgetretenen Filtrat im Scheibenhohlraum 15 ein Druckgefälle einstellt.

Die Abnahme der abgeschiedenen Feststoffe 32 erfolgt bei Drehung der Scheiben 13 in schmalen, radial über die Scheibenfläche sich erstreckenden Abnahmekästen 16, die mit Dichtflächen gegen jede Filterscheibe 13 anliegen.

Einlaufseitig enthält jeder hohle Abnahmekasten 16 eine konische, mit weichgummibezogene Dicht- und Abnahmewalze 26, die unter Pressung stark verformt werden kann. An den Stirnseiten der Walze 26 und auf der Auslaufseite des Abnahmekastens 16 sind miteinander verbundene Wände 29, 47 dicht angeschlossen, in der Art, daß zwischen Rückwand und konischer Walze 26 sowie Rückwand 47 und Filterplatten 19, 21 bewegliche Verbindungsteile wie Blattfedern mit aufgesetzten Dichtleisten 28, 48 so angeordnet sind, daß sie von dem Behälterdruck gegen die konsische Walze 26 und gegen die Filterplatte 19, 21 angepreßt werden. Die gleiche Wirkung drückt den Hohlraum des Abnahmebehälters 16 gegen die Filterplatte 19, 21, da zwischen konischer Dichtwalze 26 und Schaber 31 eine Spaltfläche 17 mit geringem Druck innerhalb des Hohlraums besteht. Jeder Abnahmebehälter 16 wird zusätzlich durch einstellbare Federkraft gegen die Filterplatte 19, 21 gepreßt. Die konische Einlaufwalze 26 ist an dem Abnahmebehälter 16 in beweglichen Lagern aufgehängt, so daß bei größerer Kuchendicke 32 die Walze 26 gegen Federkraft von der Plattenoberfläche 18 weggedrückt werden kann, wobei der Abnahmebehälter 16 dicht angelegt bleibt.

Die Einlaufdichtwalze 26 fördert im Gleichlauf mit der Scheibendrehung den Feststoffkuchen 32 in den Abnahmebehälter 16. Zur Sicherung des Gleichlaufs greifen auf den Zapfen der konischen Walze 26 befestigte Stifträder 40 in Stiftnuten 41 an den äußeren, kreisförmigen Abdichtdeckeln 23 jeder Scheibe 13 so ein, daß auch bei großer Kuchedicke die Mitnehmerstifte 40 und Stiftnuten 41 in Eingriff bleiben.

Der schmale Abnahmespalt 17 zwischen konischer Einlaufwalze 26 und auslaufseitigem Schaber 31 kann gleichzeitig mit der Abführung des abgeschiedenen Feststoffes auch zur Rückspülung der Filterplatten 19, 21 genutzt werden.

Dünnflüssige, schleimartige Feststoffe können über Rohre von einer Pumpe aus den Abnahmebehältern 16 abgesaugt werden. Beim Filtern und Entfeuchten großer Massen mineralischer oder faserförmiger Feststoffe mit hoher Kuchendicke und bei hohen Trockengehalten kann gemäß einer weiteren Ausführungsform, nach der Einlauf-Dichtwalze 26 innerhalb des Abnahmebehälters 16 eine Förderschnecke 34 radial zur Welle 14 so an der Scheibenoberfläche 18 angeordnet werden, daß die Schnecke 34 senkrecht nach unten die Feststoffe aus dem Behälter 16 hinausbefördert.

Zur weiteren Entfeuchtung des Feststoffkuchens 32 kann an die konische Dichtwalze 26 innerhalb des Abnahmebehälters 16 ein Preßschuh 37 dicht angeschlossen werden, der aus einer Kammer mit oberer und hinterer feststehender Wand, sowie vorderer und unterer beweglicher Wand besteht, wobei hinten ein Druckluftschlauch 38 die untere Wand gegen den Feststoffkuchen 32 preßt. Zusätzlich wird mit Drucklufteinblasung durch Löcher 39 in der unteren Wand noch im Kuchen befindliche Flüssigkeit in die Filterplatten 19, 21 zum Filtrat hin ausgeblasen. Die bewegliche Vorder- und Unterwand wird gegenüber dem dünnerwerdenden Kuchen schräggestellt, so daß dieser einen selbstdichtenden Pfropfen bildet, der von nachkommenden Kuchen und durch die Drehung der Scheibe 13 zu der anschließenden Förderschnecke 34 transportiert wird. Am hinteren Ende des Behälters 16 erfolgt die Abdichtung über eine vorzugsweise federblattgelagerte Schaberdichtleiste 35, die auf der Seite der Schnecke 34 scharfkantig als Schaber ausgebildet ist und für eine gute Abreinigung der Filterplattenoberfläche, welche weiterhin verbessert wird, durch die Rückspülwirkung von abgesaugten Filtrat aus einem Vakuumkanal 36 innerhalb der breiten Schaber-Dichtleiste 35 an der Auslaufseite des Abnahmebehälters 16 sowie durch die Spülwirkung eines gebündelten Einlaufstrahls des zu filternden Flüssigkeit parallel zur Filterplattenoberfläche aus einem Einströmspalt 44 über die Breite jeder Filterplatte. Der Vakuumkanal 36 kann sich dabei bis in die Seitenwände 29 erstrecken, wobei Leckwasser abgesaugt wird. Die weitere Reinigung der Filterschicht 21 kann in einer mit Belüftung 51 versehenen Spritzkammer 50 mit Spritzdüsen 49 erfolgen, wobei das Spülwasser durch den Ablauf 52 nach außerhalb des Behälters gelangt.

Die Lagerung jedes Abnahmebehälters 16 an jeder Scheibenseite erfolgt gemeinsam mit je einem Einströmrohr einseitig am Druckbehälter 11, wobei der Abnahmebehälter 16 in eine Halterung eingesteckt wird, die ihrerseits eine genaue Anlagebewegung des Abnahmebehälters 16 an die Filterplatte 19, 21 durch Federkraft unterstützt, erlaubt und kann zusätzlich auf der Welle 14 in einer Gleitlagerung geführt werden.

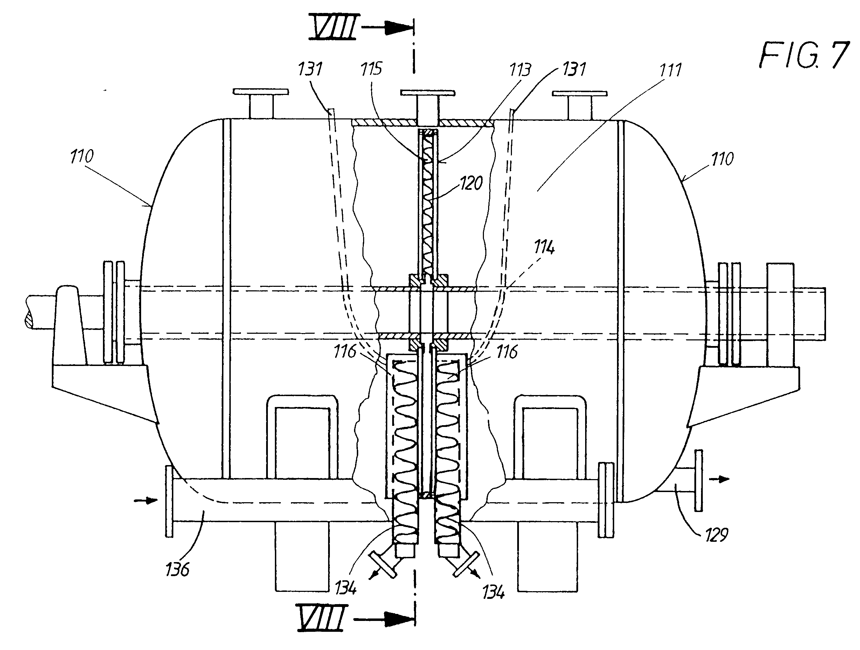

Die in den Fig. 7 bis 10 der Zeichnungen dargestellte zweite Filtereinrichtung zum kontinuierlichen Filtrieren von Feststoffe aufweisenden Flüssigkeiten besteht ebenfalls aus einem liegenden, mit Endböden 110 geschlossenen, zylindrischen Behälter 111 der vollständig mit der zu filtrierenden Flüssigkeit gefüllt ist, mit einem Druckgefälle zwischen der zu filtrierenden Flüssigkeit und dem Filtrat. Der Druckbehälter 111 kann dabei einen Zulaufdruck von über 10 bar aufweisen. Der Behälter weist eine Reihe, aus hohlen Filtersektoren 112 gebildete, im Abstand zueinanderstehende Scheiben 113 auf, die auf einer angetriebenen, horizontalen Hohlwelle 114 lotrecht angeordnet sind.

Die Scheiben 113, von denen in Fig. 7 nur eine dargestellt ist, weisen beidseitig auf jedem Filtersektor 112 Filterauflagen 121 auf, die noch zu beschreiben sind. Der dazwischenliegende Hohlraum 115 dient zum Abfluß des Filtrats durch die Hohlwelle 114. Auf beiden Seiten jeder Filterscheibe 113 sind noch zu erläuternde, feststehende Einrichtungen zum Abnehmen und Entfernen der Feststoffe von den die Filterscheibenaußenseiten 118 bildenden Filterauflagen 121 vorgesehen. Jede der Einrichtungen 116 zum Abnehmen und Entfernen der Feststoffe von den Filterauflagen 121 wird von je einem geschlossenen und vollständig von der zu filtrierenden Flüssigkeit umgebenen hohlen Kasten gebildet, der abgedichtet gegen die zugehörige Filterauflage 121 anliegt und im Anlagebereich in noch zu beschreibender Weise mindestens einen, den gesamten Radius der Filterscheibe 113 erfassenden Einlaßspalt 117 aufweist. Der von dem Kasten 116 gebildete Abnahmebehälter dient somit in zuverlässiger Weise mit seinem Einlaßspalt 117 zum Abnehmen der Feststoffe von den Filterauflagen 121.

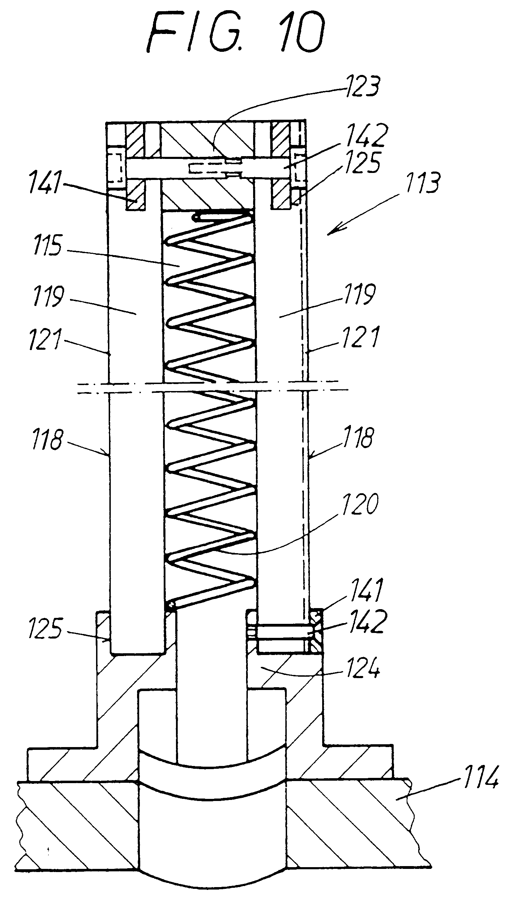

Wie insbesondere aus der Fig. 10 ersichtlich, sind die von den Außenseiten 118 der Filterscheiben 113 gebildeten Filterauflagen aus jeweils zwei ebenen, druckfesten Filterplatten 119 mit mindestens einer Filterschicht gebildet mit inneren, gegenseitigen Abstützungen 120 und membranfilterähnlichen, mikroporösen Oberflächen. Die ebene, druckfeste Filterplatte 119 besteht dabei aus einer aus grobem Stützkörpermaterial gesinterten Platte, die eine Filterfeinheit von etwa 10 bis 200 Mikron aufweist. Die Filterplatte 119 besteht dabei aus gesintertem, mikroporösen Polymer-Kunststoff, gesintertem Metallpulver und kann zusätzlich eine Schicht aus Metall-Keramikmaterial aufweisen.

Die ebene, druckfeste Filterplatte 119 kann außenseitig mindestens eine zusätzliche membranfilterähnliche, aufgesinterte Filterschicht 121 mit vorzugsweise zwischen 0,5 und 50 Mikron Filterfeinheit aufweisen. Die zusätzliche, aufgesinterte Filterschicht 121 kann dabei aus Metallkeramik-Werkstoff bestehen oder/und eine mikroporöse Filterschicht aus Polymer-Kunststoff sowie Carbonwerkstoff aufweisen. Weiterhin ist es auch möglich, daß die ebene, druckfeste Schichtfilterplatte 119 aus nicht näher dargestellten Verbund-Schicht-Sieben besteht, mit grobem Stützkörpermaterial und membranfilterähnlicher, durch Schweiß-Punkt-Heften metallisch festverbundenen Filterschicht, vorzugsweise mit einer Filterfeinheit zwischen 0,5 und 50 Mikron.

Aus der Fig. 10 ist weiterhin zu entnehmen, daß die Abstützungen 120 der Mehrschichtfilterplatte 119, 121 vollflächig innerhalb des Filtrat-Ablauf-Hohlraums 115 der Scheiben 113 zwischen jeweils zwei Filterplatteninnenseiten durch druckfeste Wendelfedern gebildet sind, die vorzugsweise in Umfangsrichtung der Scheiben 113 angeordnet sind.

Wie bereits erläutert, weisen die Scheiben 113 hohle Filtersektoren 112 auf, wobei die Filterplatte 119, 121 auf Träger 122, Deckel 123 und in Wellenaufnahmeringe 124 eingesetzt sind. Die Wellenaufnahmeringe 124 eines jeden Sektors 112 weisen dabei U-förmige Nuten 125 auf, in denen die Filterplatten 119, 121 eingesetzt sind. Die Filterplatten 119, 121 sind mit U-förmigen Dichtungen 125 mit Preßleisten 141 durch mechanische Pressung mit Preß-schrauben 142 beidseitig gegen die Deckelleisten 123 gepreßt.

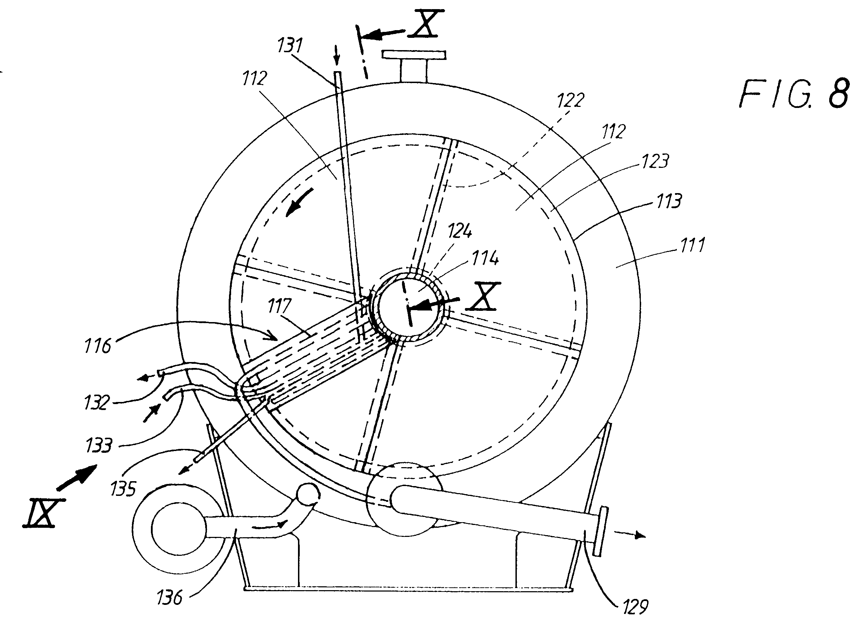

Der zylindrische Behälter 111 soll eine möglichst große Anzahl Scheiben 113 aufweisen, die eng und parallel zueinander auf der zentralen Hohlwelle 114 angeordnet sind, so daß in dem Druckbehälter 111 eine möglichst große Filterfläche eingebaut ist. Der Druckbehälter 111 kann erfindungsgemäß bis über 10 bar Zulaufdruck aufnehmen. Die ebenen Filterflächen sind als druckfeste Einschicht- oder Mehrschichtfilterplatte 119, 121 ausgebildet mit gegenseitigen inneren Abstützungen 120 und bilden die beidseitigen druckdichten Abdeckungen 119 der Filterscheiben 113. Als druckfester Abstandhalter 120 für die Filterplatten 119, 121 sind im hohlen Filtrat-Ablauf-Raum 115 ganzflächig in jedem Scheibensektor 112 Wendelfedern 120 angeordnet. Bei kleinen Filtern sind Einkreis-, Halb- oder Viertelkreissektoren vorgesehen, wie dies die Fig. 8 darstellt. Bei größeren Filtern können auch acht Sektoren auf jeder Scheibenseite 113 angeordnet werden. In einfacher Weise wird jeder Sektoraufbau 112 durch einen äußeren konzentrisch zur Welle 114 mit je zwei Sektorträgern 122 verbundenen, teilkreisförmigen Deckeln 123 gegen die Filterplatten 119 verschlossen, die zur Abdichtung vorzugsweise mit Preßleisten 141 und Spannschrauben 142 angepreßt werden. Die Pressung wird also über Preßleisten 141 auf die Deckel 123 und die Ränder der Filterplatten 119 aufgebracht.

Die Abscheidung der Feststoffe aus der unter Druck zu laufenden Flüssigkeit erfolgt auf den mikroporösen, membranfilterähnlichen glatten Oberflächen 118, wobei sich gegenüber dem durchgetretenen Filtrat im Scheibenhohlraum 115 ein Druckgefälle einstellt.

Die Abnahme der abgeschiedenen Feststoffe erfolgt bei motorischer Drehung der Scheiben 113 in schmalen, radial über die Scheibenflächen sich erstreckenden Abnahmekästen 116, die mit Dichtflächen 140 gegen jede Filterscheibe 113 anliegen.

Die sich radial über die Filterscheibenaußenseiten 118 erstreckenden Einrichtungen 116 auf beiden Seiten jeder Filterscheibe 113 dienen zum Abnehmen und Entfernen der Feststoffe von den Filterauflagen 119, 121. Die Einrichtungen sind dabei von einer Kasteneinrichtung gebildet mit mindestens einer gegen die Filterauflagen 119, 121 abgedichteten Kammer, die mit Federkraft gegen mikroporöses Metall- oder Kunststoffmaterial aus mindestens einer Materialart und mindestens einer Korngrößenmischung preßbar ist. Die Filterauflagen 119, 121 sind dabei als Kreissektoren 112 ausgebildet und mit umlaufenden U-förmigen Schlitzdichtungen 125 mittels verschraubten Preßleisten 141 dicht gegen Deckelleisten 123 und Scheibenträger 122 sowie Wellenaufnahmeringe 124 drückbar. Dadurch wird eine zuverlässige Abnahme der Feststoffe von den Filterscheiben 113 erreicht.

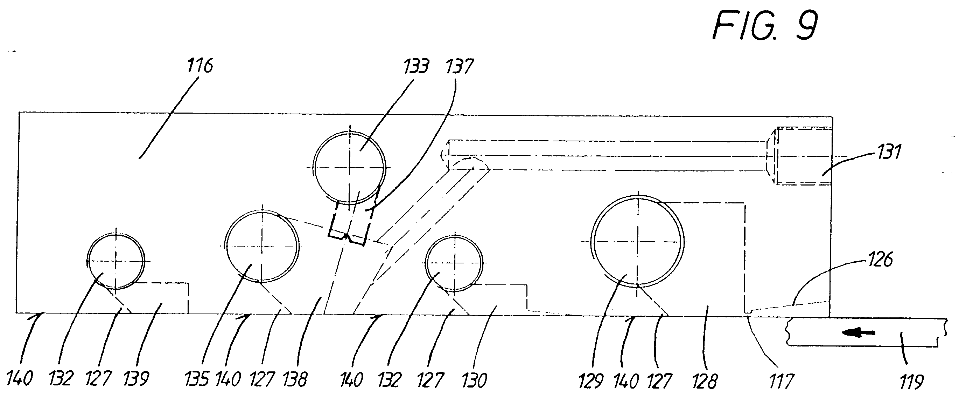

Die Kasteneinheit 116 weist, wie insbesondere aus der Fig. 9 ersichtlich, einlaufseitig eine schräge Vorderwand 126 auf, mit einer Spaltöffnung 117 zu dem anschließenden Feststoffsammelraum 128, aus dem der Feststoff mit einer Förderschnecke 134 austragbar ist. Nicht näher bezeichnete Zwischenwände trennen den Feststoffsammelraum 128 und die anschließende Rückspülkammer 130, so wie die nachfolgende Spritzkammer 138 voneinander ab. Die Abdichtung der Dichtleisten 140 gegen die Filterplatte 119 erfolgt dabei durch Anwendung von Vakuum in der Rückspülkammer 130 und in dem Vakuumkanal 139, wobei Leckwasser außen um die Spritzkammer 138 herum absaugbar ist. Mit diesem Vakuum wird die Anpreßkraft der Dichtleiste 140 an die zugehörige Filterauflage 119, 121 erhöht. Die Filterauflage 119, 121 kann dabei durch die Vakuumkraft eine kleine Verformung in die Rückspülkammer 130 hinein erfahren.

Zur weiteren Abdichtung kann dabei der Feststoffsammelraum und jede Kammer auslaufseitig je eine scharfe Schaberkante 127 aufweisen. Diese Schaberkante dient dabei natürlich auch zugleich zur Säuberung der Außenseiten 118 der Filterauflagen 119, 121.

Die Spritzkammer 138 kann über ein Rohr 131 mit der Außenluft verbunden sein, und das Spritz-Spülwasser kann nach außen frei durch den Ablauf 135 gelangen.

An der Hohlwelle 114 und am Außenrand sowie zwischen den Kammern können Dichtleisten 140 zur Abtrennung der Kammern gegeneinander und gegenüber dem Druckbehälterinnenraum angeordnet sein. Die Kasteneinrichtungen 116 können mit mindestens einer gegen die Filterauflage 119, 121 abgedichteten Kammer aus Kunststoffmaterial hergestellt sein. In anderen Ausführungen kann die Kasteneinheit 116 mit mindestens einer gegen die Filterauflage 119, 121 abgedichete Kammer aus Metall hergestellt sein.

Die Filterauflagen 119, 121 können aus einem mikroporösen Kunststoffgemisch von unterschiedlichem Material und gleicher Korngröße bestehen. Die mikroporösen Filterplatten 119, 121 können auch aus gleichem Kunststoffmaterial mit mindestens zwei verschiedenen Korngrößen bestehen. Weiterhin können die Filterauflagen 119, 121 auch aus mindestens zwei unterschiedlichen Materialien und mindestens zwei unterschiedlichen Korngrößen bestehen.

Die die Filterscheibenaußenseiten 118 bildenden Filterauflagen 119, 121 können mit einer umlaufenden Nut-Preßleiste 141 gegen die Scheibenträger 122 und die Deckelleiste 123 sowie die Wellenaufnahmeringe 124 mit Preßschrauben 142 abgedichtet werden. Die umlaufende Dichtungsnut 125 am äußeren Rand jeder Platte 119, 121 kann an der Filterauflage umlaufend mittig angeordnet sein, zur Aufnahme der einsteckbaren Preßleiste 141.

Die Schrauben 142 können dabei so angeordnet sein, daß die Schraubenköpfe in dem vor der Preßleiste 141 stehengebliebenen Filtermaterial versenkt sind und die Preßkraft durch die stabile und steife Preßleiste 141 auf den innenstehenden Steg und gegen die Scheibenträger 122 und Deckelleisten 123 zur vollständigen Abdichtung übertragbar sind.

Wie insbesondere aus der Fig. 8 ersichtlich, sind am zylindrischen Behälter 111 Einlaufverteilerrohre 136 vorgesehen, mit denen die Flüssigkeit in den zylindrischen behälter 111 eingebracht wird. Die Feststoffabsaugung erfolgt durch das Rohr 129. Durch die Kammer 138 wird Spritzwasser mit Spritzdüsen 137 eingeleitet zur Reinigung der Filterauflagen 119, 121, wobei eine Belüftung 131 für die Spritzkammer 138 vorgesehen ist. Am Vakuumkanal 139 ist ein Vakuumanschluß 132 vorgesehen. An der Spritzkammer 138 ist auch noch ein Spülwasserablauf 135 vorgesehen, während das Spritzwasser durch Düsen 137 eingebracht wird.

Wie bereits erwähnt, sind die dargestellten Abbildungen lediglich beispielsweise Verwirklichungen der Erfindung und diese nicht darauf beschränkt.

### Bezugszeichenliste:

- 10: Endböden
- 11: zylindrischer Behälter
- 12: Filtersektoren
- 13: Scheiben
- 14: Hohlwelle
- 15: Hohlraum
- 16: Abnahmekasten
- 17: Einlaßspalt
- 18: Außenseite
- 19: Filterplatte
- 20: Abstützung
- 21: Filterschicht
- 22: Träger
- 23: Deckel
- 24: Wellenaufnahmeringe
- 25: U-förmige Nut
- 26: Dicht- und Abnahmewalze
- 27: Verbindungsteil
- 28: Dichtungsleiste
- 29: Seitenwand
- 30: Walzenlagerung
- 31: Schaber
- 32: Feststoffkuchen
- 33: Absaugöffnung
- 34: Förderschnecke
- 35: Schaberdichtleiste
- 36: Vakuum-Kanal
- 37: Preßschuh
- 38: Druckluftschlauch
- 39: Öffnungen
- 40: Stifträder
- 41: Stiftnuten
- 42: Schlitzrohr
- 43: Zulaufrohr
- 44: Einströmrohrspalt
- 45: Blattfeder
- 46: Preßleiste
- 47: Kasten-Hinterwand
- 48: Walzen-Dichtleiste
- 49: Spritzdüse
- 50: Spritzkammer
- 51: Spritzkammer-Belüftung
- 52: Spülwasserablauf
- 53: Feststoffsammelraum
- 110: Endböden
- 111: zylindrischer Behälter
- 112: Filtersektor
- 113: Scheibe
- 114: Hohlwelle
- 115: Hohlraum
- 116: Abnahmekasten
- 117: Einlaßspalt
- 118: Außenseite
- 119: Filterplatte
- 120: Abstützungen
- 121: Filterschicht
- 122: Träger
- 123: Deckel
- 124: Wellenaufnahmeringe
- 125: U-förmige Nut
- 126: Vorderwand
- 127: Schaber
- 128: Feststoffsammelraum
- 129: Feststoffabsaugung
- 130: Vakuum-Rückspülkammer
- 131: Spritzkammer-Belüftung
- 132: Vakuumanschluß
- 133: Spritzwasseranschluß
- 134: Förderschnecke
- 135: Spülwasserablauf
- 136: Einlaufverteilerrohre
- 137: Spritzdüse
- 138: Spritzkammer
- 139: Vakuum-Kanal
- 140: Dichtleiste
- 141: Preßleiste
- 142: Preßschraube

## Patentansprüche

1. Filter zum kontinuierlichen Filtrieren von Feststoffe aufweisenden Flüssigkeiten in einem geschlossenen, zylindrischen Behälter (11, 111) mit einem Druckgefälle zwischen der zu filtrierenden Flüssigkeit und dem Filtrat, mit auf einer angetriebenen, horizontalen Hohlwelle (14, 114) lotrecht angeordneten, im Abstand zueinander stehenden, aus hohlen Filtersektoren (12, 112) gebildeten Scheiben (13, 113) mit innerhalb des für den Abfluss des Filtrats in die Hohlwelle (14, 114) vorgesehenen Hohlraums (15, 115) angeordneten Abstützungen (20, 120) für die Filterauflagen beidseitig auf jedem Filtersektor (12, 112) und mit beweglich angepressten Einrichtungen auf beiden Seiten jeder Filterscheibe (13, 113) zum Abnehmen und Entfernen der Feststoffe von den die Filterscheibenaussenseiten (18, 118) bildenden Filterauflagen und zu deren Reinigung, wobei jede Einrichtung zum Abnehmen und Entfernen der Feststoffe von den Filterauflagen und zu deren Reinigung von je einem geschlossenen und vollständig von der zu filtrierenden Flüssigkeit umgebenen hohlen Abnahmekasten (16, 116) mit mehreren, voneinander getrennten Kammern besteht, wobei jede Kammer mindestens einen, den Radius der Filterscheibe (13, 113) erfassenden Einlassspalt (17, 117) aufweist und mindestens eine der Kammern abgedichtet gegen die zugehörige Filterauflage anliegt,
**dadurch gekennzeichnet,**
a) dass die Filterauflagen druckfeste Filterplatten (19, 119) sind,
b) dass zwischen den beiden den Hohlraum (15, 115) zwischen sich einschließenden Filterplatten (19, 119) gegenseitige Abstützungen (20, 120) vorgesehen sind,
c) dass die als zusätzliche Filterschicht (21, 121) ausgebildete Oberfläche der Filterplatten (19, 119) und die Filterplatten membranfilterähnlich und mikroporös aus mindestens einer Materialart und mindestens einer Korngrößenmischung bestehen,
d) dass die Filtersektoren (12, 112) aussen umlaufende Schlitze (25, 125) und eingelegte Pressleisten (46, 141) aufweisen und mit druckdichter Anpressung gegen Sektorträger (22, 122) Deckel (23, 123) und Wellenaufnahmeringe (24, 124) verschraubt werden,
e) dass die Abnahmekästen (16, 116) federelastisch gelagerte, auf die Filterscheibenaussenseiten (18, 118) aufliegende Schaber (31, 35, 127) aufweisen,
f) dass die Abnahmekästen (16, 116) federelastisch angepresste, auf die Filterscheibenaussenseiten (18, 118) aufliegende Dichtleisten (28, 140) aufweisen,
g) dass die sich radial über die Filterscheibenaussenseiten (18, 118) erstreckenden Abnahmekästen (16, 116) eine schräge Vorderwand (26, 126) und eine Spaltöffnung (17, 117) aufweisen,
h) dass innerhalb des Abnahmekastens (16, 116) eine Spritzkammer (50, 138) zur Reinigung der Filterplattenoberfläche mit mindestens einem um diese Spritzkammer gelegten Vakuum-Kanal (36, 139) vorgesehen ist,
i) dass die Spritzkammer (50, 138) belüftet ist und mit Spritzdüsen (49, 137) und Spülwasserablauf (52, 135) ausgerüstet ist.

2. Filter nach Anspruch 1, dadurch gekennzeichnet, daß die ebene, druckfeste Filterplatte (19, 119) aus einer aus Polymer-Kunststoff von 0,5 bis 200 Mikron Feinheit gesinterten Platte besteht.

3. Filter nach Anspruch 1, dadurch gekennzeichnet, daß die ebene, druckfeste Filterplatte (19, 119) aus Polymer-Kunststoff aus einer mikroporös gesinterten membranfilterähnlichen Oberfläche mit 0,5 bis 200 Mikron Feinheit besteht, mit grobem Stützkörpermaterial von 10 bis 200 Mikron Filterfeinheit.

4. Filter nach Anspruch 1, dadurch gekennzeichnet, daß die ebene, druckfeste Filterplatte (19, 119) aus einer aus Metallpulverspänen von 0,5 bis 200 Mikron Feinheit gesinterten Platte besteht.

5. Filter nach Anspruch 1 dadurch gekennzeichnet, daß die ebene, druckfeste Filterplatte (19, 119) aus Metallpulverspänen aus einer mikroporös gesinterten membranfilterähnlichen Oberfläche mit 0,5 bis 200 Mikron Feinheit besteht mit grobem Stützkörpermaterial von 10 bis 200 Mikron Filterfeinheit.

6. Filter nach einem der Ansprüche 1, 4 und 5, dadurch gekennzeichnet, daß die ebene, druckfeste Filterplatte (19, 119) außenseitig mindestens eine zusätzliche, membranfilterähnliche metall-keramisch aufgebrachte Filterschicht (21, 121) mit vorzugsweise zwischen 0,5 und 50 Mikron Filterfeinheit aufweist.

7. Filter nach einem der Ansprüche 1, 2 und 3, dadurch gekennzeichnet, daß die ebene, druckfeste Filterplatte (19, 119) außenseitig mindestens eine zusätzliche, membranfilterähnliche, mikroporöse Filterschicht (21, 121) aus Polymer-Kunststoff mit vorzugsweise zwischen 0,5 und 50 Mikron Filterfeinheit aufweist.

8. Filter nach Anspruch 1 oder 2, dadurch gekennzeichnet, daß die ebene, druckfeste Schichtfilterplatte (19, 119) aus Verbund-Schicht-Sieben besteht mit grobem Stützkörpermaterial und membranfilterähnlicher, durch Schweiß-Punkt-Heften metallisch fest verbundener Filterschicht (21, 121) vorzugsweise mit einer Filterfeinheit zwischen 0,5 und 50 Mikron.

9. Filter nach einem der Ansprüche 1 bis 8, dadurch gekennzeichnet, daß die Abstützungen (20, 120) der Filterplatte (19, 119) vollflächig innerhalb des Filtrat-Ablauf-Hohlraums (15, 115) der Scheiben (13, 113) zwischen jeweils zwei Filterplatteninnenseiten durch druckfeste Wendelfedern (20, 120) gebildet sind, die vorzugsweise in Umfangsrichtung der Scheiben (13, 113) angeordnet sind.

10. Filter nach einem der Ansprüche 1 bis 9, dadurch gekennzeichnet, daß die Filterplatte (19, 119) gegen Träger (22, 122), Deckel (23, 123) und Wellenaufnahmeringe (24, 124) der Scheibensektoren (12, 112) druckfest mit Preßleisten (46, 141) durch mechanische Pressung in U-förmigen Dichtnuten (25, 125) verschlossen sind.

11. Filter nach einem der Ansprüche 1 bis 10, dadurch gekennzeichnet, daß in den Preßflächen zwischen Nuten (25, 125) und Preßleisten (46, 141) vorzugsweise gegenüberliegende, ein Quadrat bildende Nuten eingelassen sind, in denen gummielastische Runddichtungen unter Pressung verformt werden.

12. Filter nach einem der Ansprüche 1 bis 11, dadurch gekennzeichnet, daß die mechanische Pressung durch einen Spannring außen um jede Scheibe (13, 113) aufgebracht ist.

13. Filter nach einem der Ansprüche 1 bis 12, dadurch gekennzeichnet, daß die radial über die Scheibenfläche (18, 118) sich erstreckenden, angepreßten Abnahmebehälter (16, 116) federelastisch gelagerte Dichtelemente (28, 31, 48) aufweisen.

14. Filter nach einem der Ansprüche 1 bis 13, dadurch gekennzeichnet, daß die federelastischen Lagerungen für die konische Walze (26) sowie für Schaber (31) und Dichtleisten (28, 48) als Blattfedern ausgebildet sind.

15. Filter nach einem der Ansprüche 1 bis 14, dadurch gekennzeichnet, daß der Schaber (31) an einer Blattfeder gelagert ist und die auslaufseitige Dichtungsleiste (28) an den Schaber (31) mit einer zweiten Blattfeder (45) gelagert ist.

16. Filter nach einem der Ansprüche 1 bis 15, dadurch gekennzeichnet, daß die Anpreßkraft der Abnahmekästen (16, 116) gegen die Filterplatte (19, 119) mit einer Druckvorrichtung gesteuert einstellbar ist.

17. Filter nach einem der Ansprüche 1 bis 16, dadurch gekennzeichnet, daß eine Förderschnecke (34, 134) für Feststoffaustrag innerhalb des Abnahmekastens (16, 116) eng und parallel zur Filterplattenaußenseite (18, 118) angeordnet ist.

18. Filter nach einem der Ansprüche 1 bis 17, dadurch gekennzeichnet, daß die konische Dicht- und Abnahmewalze (26) mit sehr dicken und sehr weichen gummielastischen Bezügen ausgerüstet und die Bezüge stark verformbar sind.

19. Filter nach einem der Ansprüche 1 bis 18, dadurch gekennzeichnet, daß zwischen konischer Dicht- und Abnahmewalze (26) sowie Austragsschnecke (34) ein Preßschuh (37) zur Auspressung von Flüssigkeit aus dem Kuchen (32) angeordnet ist.

20. Filter nach einem der Ansprüche 1 bis 19, dadurch gekennzeichnet, daß der Preßschuh (37) zulaufseitig schwenkbar gelagert und auslaufseitig vorzugsweise mit einem Druckluftschlauch (38) gegen den Kuchen preßbar ist.

21. Filter nach einem der Ansprüche 1 bis 20, dadurch gekennzeichnet, daß in dem Preßschuh (37) mindestens eine Reihe von Öffnungen (39) so angeordnet sind, daß die ganze Kuchenbreite durch Drucklufteinblasung weiter trockenbar ist.

22. Filter nach einem der Ansprüche 1 bis 21, dadurch gekennzeichnet, daß die Einströmung der Flüssigkeit vorzugsweise annähernd parallel gerichtet über die Scheibenoberfläche (18) aus einem Schlitzrohr (42) erfolgt, das an dem Abnahmekasten (16) gelagert ist.

23. Filter nach einem der Ansprüche 1 bis 22, dadurch gekennzeichnet, daß der Abnahmekasten (16, 116) einlaufseitig eine schräge Vorderwand (26, 126) aufweist mit einer Spaltöffnung (17, 117) zu dem anschließenden Feststoffsammelraum (53, 128), aus dem der Feststoff mit einer Förderschnecke (34, 134) austragbar ist.

24. Filter nach einem der Ansprüche 1 bis 23, dadurch gekennzeichnet, daß Zwischenwände den Feststoffsammelraum (53, 128) und den anschließenden Vakuum-Kanal (36, 139) bzw. eine anschließende Rückspülkammer (130), sowie die nachfolgende Spritzkammer (50, 138) voneinanderabtrennen und die Abdichtung durch Anwendung von Vakuum in der Rückspülkammer (130) und in dem Vakuum-Ringkanal (36, 139) gewährleistet ist, wobei Leckwasser außen um die Spritzkammer (50, 138) herum absaugbar und die Anpreßkraft an die zugehörige Filterauflage (19, 119, 21, 121) erhöhbar ist.

25. Filter nach einem der Ansprüche 1 bis 24, dadurch gekennzeichnet, daß die Filterauflage (19, 119) durch die Vakuumkraft eine kleine Verformung in den Vakuumkanal (36) und die Rückspülkammer (130) hinein erfährt.

26. Filter nach einem der Ansprüche 1 bis 25, dadurch gekennzeichnet, daß der Feststoffsammelraum (53, 128) und jede Kammer auslaufseitig eine scharfe Schaberkante (31, 35, 127) aufweist.

27. Filter nach einem der Ansprüche 1 bis 26, dadurch gekennzeichnet, daß die Spritzkammer (50, 138) über ein Belüftungsrohr (51, 131) mit der Außenluft verbunden ist und durch einen Anschluß Flüssigkeit mit den Düsen (49, 137) auf die Filterauflage (21, 121) gespritzt wird und das Spritz-Spülwasser durch den Ablauf (52, 135) nach außen frei abläuft.

28. Filter nach einem der Ansprüche 1 bis 27, dadurch gekennzeichnet, daß an der Welle (14, 114) und am Außenrand (23, 123) sowie zwischen den Kammern Dichtleisten (35, 140) zur Abtrennung der Kammern gegeneinander und gegenüber dem Druckbehälterinnemraum angeordnet sind.

29. Filter nach einem der Ansprüche 1 bis 28, dadurch gekennzeichnet, daß die Filterauflagen (19, 119, 21, 121) aus einem mikroporösem Kunststoffgemisch von unterschiedlichem Material und gleicher Korngröße bestehen.

30. Filter nach einem der Ansprüche 1 bis 29, dadurch gekennzeichnet, daß die mikroporösen Filterplatten (19, 119, 21, 121) aus gleichem Kunststoffmaterial mit mindestens zwei verschiedenen Korngrößen bestehen.

31. Filter nach einem der Ansprüche 1 bis 30, dadurch gekennzeichnet, daß die Filterauflagen (19, 119, 21, 121) aus mindestens zwei unterschiedlichen Materialien und mindestens zwei unterschiedlichen Korngrößen bestehen.

32. Filter nach einem der Ansprüche 1 bis 31, dadurch gekennzeichnet, daß die die Filterscheibenaußenseiten (18, 118) bildenden Filterauflagen (19, 119) mit am äußeren Rand umlaufenden U-förmigen Nuten (25, 125) und darin eingesteckten Nut-Preßleisten (46, 141) gegen die Scheibenträger (22, 122) und die Wellenaufnahmeringe (24, 124) und die Deckelleisten (23, 123) mit Preßschrauben (142) abgedichtet sind.

## Claims

1. Filter for continuous filtering, in a closed, cylindrical container, of liquids containing solids. (11, 111) with a pressure gradient between the liquid to be filtered and the filtrate, with discs (13, 113) arranged perpendicularly on a driven, horizontal hollow shaft (14, 114) and standing at a distance from each other, formed from hollow filter sectors (12, 112) with supports (20, 120), arranged inside the cavity (15, 115) provided for the draining of the filtrate into the hollow shaft (14, 114), for the filter supports on both sides of each filter sector (12, 112) and with movably pressed down devices on both sides of each filter disc (13, 113) for taking off and removing the solids from the filter supports forming the outer sides of the filter discs (18, 118) and for cleaning them, each device for taking off and removing the solids from the filter supports and for cleaning them consisting of, in each case, one closed take-off box (16, 116), hollow and completely surrounded by the liquid to be filtered with several chambers separated from each other, each chamber showing at least one inlet slit (17, 117) covering the radius of the filter disc (13, 113) and at least one of the chambers sealed off from and resting up against the associated filter support,
**characterised by the fact**
a) that the filter supports are pressure-resistant filter plates (19, 119).
b) that, between the two filter plates (19, 119) enclosing the cavity (15, 115) between them, reciprocal supports (20, 120) have been provided,
c) that the surface of the filter plates (19, 119) forming an additional filtering layer (21, 121) and the membrane-filter-like and microporous filter plates consist of one type of material and at least one grain size mixture,
d) that the filter sectors (12, 112) show slits (25, 125) running round the outside and press strips (46, 141) laid in place and are bolted to the sector carrier (22, 122), cover (23, 123) and shaft housing rings (24, 124) with pressure-tight pressing down,
e) that the take-off boxes (16, 116) show scrapers (31, 35, 127), elastic-element mounted, resting on the filter disc outer sides (18, 118),
f) that the take-off boxes (16, 116) show sealing strips (18, 118), pressed down by elastic elements and lying up against the filter disc outer sides (28, 140),
g) that the take-off boxes (16, 116) spreading out radially over the filter disc outer sides (18, 118) show an oblique front wall (26, 126) and a slit opening (17, 117),
h) that within the take-off box (16, 116) a spray chamber (50, 138) for cleaning the filter plate surface with at least one vacuum channel (36, 139) laid around this spray chamber is provided.
i) that the spray chamber (50, 138) is ventilated and equipped with spray nozzles (49, 137) and flushing water drain (52, 135).

2. Filter according to claim 1, characterised by the fact that the level, pressure-resistant filter plate (19, 119) consists of a plate sintered from polymer plastic with a fineness of 0.5 to 200 microns.

3. Filter according to claim 1, characterised by the fact that the level, pressure-resistant filter plate (19, 119) consists of polymer plastic of a microporous, sintered membrane-filter-like surface with a finess of 0.5 to 200 microns with coarse supporting body material of a filter fineness of 10 to 200 microns.

4. Filter according to claim 1, characterised by the fact that the level, pressure-resistant filter plate (19, 119) consists of a plate sintered from metal powder chips with a fineness of 0.5 to 200 microns.

5. Filter according to claim 1, characterised by the fact that the level, pressure-resistant filter plate (19, 119) of metal powder chips consists of a microporous, sintered membrane-filter-like surface with a fineness of 0.5 to 200 microns with coarse supporting-body material with a fineness of 10 to 200 microns.

6. Filter according to one of the claims 1, 4 and 5, characterised by the fact that the level, pressure-resistant filter plate (19, 119) shows on the outside at least one additional, membrane-filter-like metal/ceramically applied filter layer (21, 121) with a filter fineness preferentially between 0.5 and 50 microns.

7. Filter according to one of the claims 1, 2 and 3, characterised by the fact that the level, pressure-resistant filter plate (19, 119) on the outside shows at least one additional, membrane-filter-like, microporous filter layer (21, 121) of polymer plastic with a filter fineness preferentially between 0.5 and 50 microns.

8. Filter according to claim 1 or 2, characterised by the fact that the level, pressure-resistant layer filter plate (19, 119) of laminated layer screens consists with coarse supporting body material and membrane-filter-like filter layer (21, 121) metallically firmly connected by means of welded point tacking preferentially with a filter fineness of between 0.5 and 50 microns.

9. Filter according to one of the claims 1 to 8, characterised by the fact that the supports (20, 120) of the filter plate (19, 119) are formed with their full surface within the filtrate drain cavity (15, 115) of the discs (13, 113) between in each case two filter plate inner sides by pressure-resistant helical springs (20, 120) which are preferentially arranged in the direction of the circumference of the discs (13, 113).

10. Filter according to one of the claims 1 to 9, characterised by the fact that the filter plate (19, 119) is pressed against carriers (22, 122), cover (23, 123) and shaft locating rings (24, 124) of the disc sectors (12, 112) pressure-resistant with pressure strips (46, 141) are closed by mechanical pressure in U-shaped sealing grooves (25, 125).

11. Filter according to one of the claims 1 to 10, characterised by the fact that in the pressure faces between the grooves (25, 125) and the pressure strips (46, 141) preferentially opposite grooves forming a square are let in, in which rubber-elastic round seals are deformed under pressure.

12. Filter according to one of the claims 1 to 11, characterised by the fact that the mechanical pressure is applied by a clamping ring on the outside around each disc (13, 113).

13. Filter according to one of the claims 1 to 12, characterised by the fact that the pressed-on take-off container (16, 116) reaching radially over the surface of the disc (18, 118) shows elastic-element mounted sealing elements (28, 31, 48).

14. Filter according to one of the claims 1 to 13, characterised by the fact that the elastic-element bearing systems for the conical roller (26) as well as for the scrapers (31) and the sealing strips (28, 48) are formed as leaf springs.

15. Filters according to one of the claims 1 to 14, characterised by the fact that the scraper (31) is mounted in a leaf spring and the outlet-end sealing strip (28) is mounted on the scraper (31) with a second leaf spring (45).

16. Filter according to one of the claims 1 to 15, characterised by the fact that the pressing-down force of the take-off boxes (16, 116) against the filter plate (19, 119) is, controlled with a pressure device, adjustable.

17. Filter according to one of the claims 1 to 16, characterised by the fact that a screw conveyor (34, 134) for solids discharge within the take-off box (16, 116) is arranged close and parallel to the filter plate outer side (18, 118).

18. Filter according to one of the claims 1 to 17, characterised by the fact that the conical sealing and take-off rollers (26) are equipped with very thick and very soft rubber-elastic covers and that the covers are highly deformable.

19. Filter according to one of the claims 1 to 18, characterised by the fact that between the conical sealing and take-off rollers (26) as well as the discharge screw (34) a pressure shoe (37) is arranged for pressing out liquid from the cake (32).

20. Filter according to one of the claims 1 to 19, characterised by the fact that the pressure shoe (37) is slewably mounted at the supply end and at the discharge end is preferentially capable of being pressed against the cake with a compressed air hose (38).

21. Filter according to one of the claims 1 to 20, characterised by the fact that in the pressure shoe (37) at least one row of openings (39) is arranged in such a way that the whole cake width is further dryable by means of the injection of compressed air.

22. Filter according to one of the claims 1 to 21, characterised by the fact that the inflow of liquid takes place preferentially directed approximately parallel across the disc surface (18) from a slit tube (42) that is mounted on the take-off box (16).

23. Filter according to one of the claims 1 to 22, characterised by the fact that the take-off box (16, 116) at the inlet end shows an oblique front wall (26, 126) with a slit opening (17, 117) towards the following solids collecting room (53, 128) from which the solids are dischargeable with a screw conveyor (34, 134).

24. Filter according to one of the claims 1 to 23, characterised by the fact that intermediate walls separate the solids collecting room (53, 128) and the downstream vacuum channel (36, 139) and/or a downstream flush-back chamber (130) as well as the following spray chamber (50, 138) from one another and that the sealing off by means of the application of vacuum in the flush-back chamber (130) and in the annular vacuum channel (36, 139) is ensured, leakage water outside around the spray chamber (50, 138) being extractable by suction, and the pressing-down force onto the associated filter support (19, 119, 21, 121) being increasable.

25. Filter according to one of the claims 1 to 24, characterised by the fact that the filter support (19, 119) as a result of the vacuum force experiences a slight deformation into the vacuum channel (36) and the flush-back chamber (130).

26. Filter according to one of the claims 1 to 25, characterised by the fact that the solids collecting room (53, 128) and every chamber at the outlet end shows a sharp scraper edge (31, 35, 127).

27. Filter according to one of the claims 1 to 26, characterised by the fact that the spray chamber (50, 138) is connected with the outside air via a ventilation tube (51, 131) and that, through a connection, liquid is sprayed by means of the nozzles (49, 137) onto the filter support (21, 121) and that the spray finishing water freely drains to the outside through the drain (52, 135).

28. Filter according to one of the claims 1 to 27, characterised by the fact that on the shaft (14, 114) and on the outer edge (23, 123) as well as between the chambers, sealing strips (35, 140) are arranged for separation of the chambers from each other and from the pressure vessel interior chamber.

29. Filter according to one of the claims 1 to 28, characterised by the fact that the filter supports (19, 119, 21, 121) consist of a microporous mixture of plastics of different material and identical grain size.

30. Filter according to one of the claims 1 to 29, characterised by the fact that the microporous filter plates (19, 119, 21, 121) consist of the same plastic material with at least two different grain sizes.

31. Filter according to one of the claims 1 to 30, characterised by the fact that the filter supports (19, 119, 21, 121) consist of at least two different materials and at least two different grain sizes.

32. Filter according to one of the claims 1 to 31, characterised by the fact that the filter supports (19, 119), forming the outer sides of the filter discs (18, 118), with U-shaped grooves (25, 125) running round the outer edge and the groove pressure strips (46, 141) pressed into them, are sealed off from the disc holders (22, 122) and the shaft locating rings (24, 124) and the cover strips (23, 123) with the help of press-screws (142).

## Revendications

1. Filtre pour filtrer en continu des liquides contenant des solides dans un récipient cylindrique fermé (11, 111) à gradient de pression entre le liquide à filtrer et le filtrat, comprenant des disques (13, 113) perpendiculaires à un arbre entraîné horizontal creux (14, 114) disposés à une certaine distance réciproque et formés de secteurs filtrants creux (12, 112), avec des appuis (20, 120) disposés à l'intérieur de la cavité (15, 115) servant à l'écoulement du filtrat dans l'arbre creux (14, 114), lesquels appuis servant à l'applique bilatérale des filtres sur chaque secteur filtrant (12, 112) et à dispositifs pressés mobiles des deux côtés de chaque disque (13, 113) servant à décoller et à retirer les solides sur les surfaces d'applique formant les côtés extérieurs (18, 118) des filtres et à les nettoyer, chaque dispositif servant à décoller et retirer les matières des surfaces d'applique des filtres et à nettoyer ces dernières est formé par un caisson (16, 116) amovible et creux, fermé et complètement baigné par le liquide à filtrer, lequel (16, 116) comprend plusieurs chambres séparées les unes des autres, chaque chambre présentant au moins un interstice d'insertion (17, 117) épousant le rayons du disque de filtre (13, 113) et étanchant au moins l'une des chambres par rapport à la surface d'applique de filtre qui lui est affectée,
**caractérisé en ce que,**
a) les surfaces d'applique de filtre sont des plaques (19, 119) résistantes à la pression,
b) entre les deux plaques de filtre (19, 119) délimitant entre elles la cavité (15, 115) sont prévues des appuis réciproques (20, 120),
c) la surface des plaques filtrantes (19, 119) formant une couche filtrante supplémentaire (21, 121) et les plaques filtrantes elles-mêmes étant microporeuses et similaires à un filtre à diaphragme se composent d'au moins un type de matériau et d'au moins un mélange granulométrique,
d) les secteurs filtrants (12, 112) présentent des fentes (25, 125) périmétriques extérieures et des listeaux compressés insérés (46, 141) et en ce que des couvercles (23, 123) et anneaux-réceptacles (24, 124) sur arbre sont vissés, en applique étanche à la pression, contre les supports (22, 122) de secteur.
e) les caissons amovibles (16, 116) présentent des racloirs (31, 35, 127) en appui élastique par ressort sur les côtés extérieurs (18, 118) des disques filtrants,
f) les caissons amovibles (16, 116) présentent des listeaux d'étanchéité (28, 140) élastiquement compressés par ressort et appuyant sur les côtés extérieurs (18, 118) des disques filtrants,
g) les caissons amovibles (16, 116) s'étendant radialement sur les côtés extérieurs (18, 118) des disques filtrants présentent une paroi avant oblique (26, 126) et un interstice (17, 117),
h) à l'intérieur des caissons amovibles (16, 116) est prévue une chambre de pulvérisation (50, 138) servant à nettoyer la surface des plaques filtrantes, avec au moins un canal à dépression (36, 139) disposé autour de cette chambre de pulvérisation,
i) la chambre de pulvérisation (50, 138) reçoit un apport d'air et qu'elle est équipée de buses pulvérisatrices (49, 137) et d'un moyen d'écoulement (52, 135) de l'eau de lavage.

2. Filtre selon la revendication 1, caractérisé en ce que la plaque filtrante (19, 119) plane et résistante à pression est formée d'une plaque frittée en matière plastique polymère d'une porosité comprise entre 0,5 et 200 microns.

3. Filtre selon la revendication 1, caractérisé en ce que la plaque filtrante (19, 119) plane et résistante à la pression en matière plastique polymère se compose d'une surface frittée microporeuse, similaire à celle d'un filtre à diaphragme, d'une porosité comprisé entre 0,5 et 200 microns, le matériau grossier formant corps d'appui ayant lui une porosité filtrante comprise entre 10 et 200 microns.

4. Filtre selon la revendication 1, caractérisé en ce que la plaque filtrante (19, 119) plane et résistante à la pression se compose d'une plaque frittée formée de copeaux métalliques pulvérulents d'une porosité comprise entre 0,5 et 200 microns.

5. Filtre selon la revendication 1, caractérisé en que ce la plaque filtrante (19, 119) plane et résistante à la pression en copeaux métalliques pulvérulents se compose d'une surface frittée microporeuse, similaire à celle d'un filtre à diaphragme, d'une porosité comprise entre 0,5 et 200 microns, le matériau grossier formant corps d'appui ayant lui une porosité filtrante comprise entre 10 et 200 microns.

6. Filtre selon l'une des revendications 1, 4 et 5, caractérisé en ce que la plaque filtrante (19, 119) plane et résistante à la pression présente, montée du côté extérieur, au moins une couche filtrante (21, 121) métallocéramique supplémentaire similaire à celle d'un filtre à diaphragme dont la porosité filtrante est comprise de préférence entre 0,5 et 50 microns.

7. Filtre selon l'une des revendications 1, 2 et 3, caractérisé en ce que la plaque filtrante (19, 119) plane et résistante à la pression présente côté extérieur au moins une couche filtrante microporeuse (21, 121) supplémentaire similaire à celle d'un filtre à diaphragme, en matière plastique polymère dont la porosité filtrante est comprise de préférence entre 0,5 et 50 microns.

8. Filtre selon la revendication 1 ou 2, caractérisé en ce que la plaque filtrante stratifiée (19, 119) se compose de cribles stratifiés composites à matériau grossier formant corps d'appui et à couche filtrante (21, 121) similaire à celle d'un filtre à diaphragme, métalliquement fixée définitivement par soudage par point, et dont la finesse de filtration est comprise entre 0,5 et 50 microns.

9. Filtre selon l'une des revendications 1 à 8, caractérisée en ce que les appuis (20, 120) de la plaque filtrante (19, 119) sont formés sur toute la surface à l'intérieur de la cavité (15, 115) d'écoulement du filtrat que présentent les disques (13, 113), entre chaque fois deux côtés intérieurs de plaque filtrante, par des ressorts hélicoïdaux (20, 120) résistants à la pression et disposés de préférence dans le sens circonférentiel des disques (13, 113).

10. Filtre selon l'une des revendications 1 à 9, caractérisé en ce que la plaque filtrante (19, 119) est obturée de manière étanche à la pression au moyen de listeaux de compression (46, 141), par pressage mécanique dans des rainures d'étanchéité (25, 125) en U contre des supports (22, 122), couvercles (23, 123) et anneaux-réceptacles sur arbre (24, 124) pour les secteurs de disque (12, 112).

11. Filtre selon l'une des revendications 1 à 10, caractérisé en ce que dans les surfaces de compression situées entre les rainures (25, 125) et les listeaux de compression (46, 141) sont ménagées des rainures de préférence en face, formant un carré, dans lesquelles des joints élastiques ronds sont déformés par compression.

12. Filtre selon l'une des revendications 1 à 11, caractérisé en ce que le pressage mécanique est développé par un anneau de serrage extérieur ceinturant chaque disque (13, 113).

13. Filtre selon l'une des revendications 1 à 12, caractérisé en ce que les récipients amovibles (16, 116), soumis à une force de compression et s'étendant radialement sur la surface du disque (18, 118), présentent des éléments d'étanchéité (28, 31, 48) montés sur paliers-ressorts élastiques.

14. Filtre selon l'une des revendications 1 à 13, caractérisé en ce que les paliers-ressorts élastiques servant au rouleau conique (26) ainsi qu'au racloir (31) et aux listeaux d'étanchéité (28, 48) sont formés par des ressorts à lames.

15. Filtre selon l'une des revendications 1 à 14, caractérisé en ce que le racloir (31) est en appui contre un ressort à lame et que le côté sortie du listeau d'étanchéité (28) est en appui contre le racloir (31) au moyen d'un second ressort à lame (45).

16. Filtre selon l'une des revendications 1 à 15, caractérisé en ce que la force de compression des caissons amovibles (16, 116) contre la plaque filtrante (19, 119) est réglable et pilotable au moyen d'un dispositif de compression.

17. Filtre selon l'une des revendications 1 à 16, caractérisé en ce qu'une vis sans fin (34, 134), convoyant les solides hors de l'appareil, est disposée à l'intérieur du caisson amovible (16, 116) très près du côté extérieur (18, 118) de la plaque filtrante et parallèlement à celui-ci.

18. Filtre selon l'une des revendications 1 à 17, caractérisé en ce que le rouleau conique (26) d'étanchéité amovible est doté de revêtements caoutchouc élastiques très épais et très mous et que lesdits revêtements sont très déformables.

19. Filtre selon l'une des revendications 1 à 18, caractérisé en ce qu'entre le rouleau conique (26) d'étanchéité amovible et la vis fin (34) extractrice est disposé un sabot compresseur (37) servant à presser le liquide hors du tourteau (32).

20. Filtre selon l'une des revendications 1 à 19, caractérisé en ce que le sabot presseur (37) est monté côté alimentation sur palier pivotant et côté sortie est pressable contre le tourteau par le biais d'un flexible à air comprimé (38).

21. Filtre selon l'une des revendications 1 à 20, caractérisé en ce que dans le sabot presseur (37) au moins une rangée d'orifices (39) est disposée de telle sorte que l'on puisse poursuivre le séchage du tourteau sur toute sa largeur par insufflation d'air comprimé.

22. Filtre selon l'une des revendications 1 à 21, caractérisé en ce que l'afflux de liquide a lieu orienté de préférence approximativement parallèle sur la surface du disque (18) depuis un tuyau à fentes (42), lequel tuyau est en appui contre le caisson amovible (16).

23. Filtre selon l'une des revendications 1 à 22, caractérisé en ce que le caisson amovible (16, 116) présente côté entrée une paroi avant oblique (26, 126) avec un interstice (17, 117) ouvrant accès au compartiment (53, 128) consécutif collecteur de solides, dont lesdits solides sont évacuables par le biais d'une vis convoyeuse sans fin (34, 134).

24. Filtre selon l'une des revendications 1 à 23, caractérisé en ce que des cloisons intermédiaires séparent les uns des autres le compartiment (53, 128) collecteur de solides et le canal (36, 139) à dépression consécutif ainsi qu'une chambre consécutive (130) de rinçage inverse, ainsi que la chambre (50, 138) d'injection en aval, l'étanchéité étant assurée par application d'une dépression dans la chambre (130) de rinçage inverse et dans le canal (36, 139) annulaire à dépression , l'eau ayant fuit à l'extérieur étant aspirable tout autour de la chambre de pulvérisation (50, 138), et la force de compression étant augmentable au niveau de la surface d'appui (19, 119, 21, 121) de filtre correspondante.

25. Filtre selon l'une des revendications 1 à 24, caractérisé en ce que la surface d'appui (19, 119) de filtre subit, sous l'effet de la force exercée par la dépression, une légère déformation en direction de l'intérieur du canal à dépression (36) et de la chambre de rinçage inverse (130).

26. Filtre selon l'une des revendications 1 à 25, caractérisé en ce que le compartiment (53, 128) collecteur des solides et chaque chambre présentent côté sortie une arête (31, 35, 127) de racloir coupante.

27. Filtre selon l'une des revendications 1 à 26, caractérisé en ce que la chambre de pulvérisation (50, 138) est reliée à l'air extérieur par le biais d'un tuyau d'apport d'air (51, 131) et en ce que par un raccord du liquide est pulvérisé par des buses (49, 137) sur la surface (21, 121) du filtre et en ce que l'eau de lavage pulvérisée emprunte le moyen d'écoulement (52, 135) pour s'écouler librement vers l'extérieur.

28. Filtre selon l'une des revendications 1 à 27, caractérisé en ce que contre l'arbre (14, 114) et conte le bord extérieur (23, 123) ainsi qu'entre les chambres sont disposées des listeaux d'étanchéité (35, 140) servant à séparer les chambres les unes des autres et par rapport au compartiment intérieur du réservoir sous pression.

29. Filtre selon l'une des revendications 1 à 28, caractérisé en ce que les surfaces d'appui des filtres (19, 119, 21, 121) se composent d'un mélange microporeux de matières plastiques diverse d'une granulométrie identique.

30. Filtre selon l'une des revendications 1 à 29, caractérisé en ce que les plaques filtrantes microporeuses (19, 119, 21, 121) se composent de la même matière plastique dans au moins deux granulométries différentes.

31. Filtre selon l'une des revendications 1 à 30, caractérisé en ce que les surfaces d'appui des filtres (19, 119, 21, 121) se composent d'au moins deux matières différentes dans au moins deux granulométries différentes.

32. Filtre selon l'une des revendications 1 à 31, caractérisé en ce que les surfaces d'appui (19, 119) formant les côtés extérieurs (18, 118) des disques de filtre sont étanchées au moyen de vis de compression (142) par des rainures (25, 125) en U disposées circonférentiellement sur leur bord extérieur et par des listeaux (46, 141) enfoncés dans lesdites rainures, lesquels (46, 141) appliquent contre les porte-disques (22, 122), les anneaux-réceptacles sur arbre (24, 124) et les listeaux de couvercle (23, 123).
